# EUROPEAN PATENT SPECIFICATION

(11) **EP 0 515 233 B1**
(45) Date of publication and mention of the grant of the patent: **06.08.1997**
(21) Application number: 92304708.8
(22) Date of filing: 26.05.1992
(51) Int. Cl.: B29D 28/00

(54) **Plastics material mesh structure**
Kunststoff-Netzwerk
Treillis en matière plastique

(30) Priority: 24.05.1991 GB 9111304; 09.03.1992 GB 9205112
(43) Date of publication of application: 25.11.1992
(73) Proprietor: Netlon Limited, Blackburn Lancashire BB2 4PJ (GB)
(72) Inventor: Mercer, Frank Brian, Blackburn, BB2 6QF Lancashire (GB); Martin, Keith Fraser, Blackburn, BB6 9BY Lancashire (GB); Gardner, Kenneth, Blackburn, BB2 7BX Lancashire (GB)
(74) Representative: Lyndon-Stanford, Edward Willoughby Brooke

(56) References cited:
- US-A- 3 386 876
- US-A- 3 441 638
- US-A- 4 374 798
- US-A- 3 386 876
- US-A- 3 386 876
- US-A- 3 441 638
- US-A- 4 374 798
- US-A- 4 374 798

## Description

The present invention relates to a method of producing an integral biaxially-molecularly-oriented plastics material mesh structure, of the type comprising: providing a plastics starting material having a thickness of not less than about 2 mm at its thickest point and having a pattern of holes defining strand-forming zones between respective adjacent holes, and notional junction zones between the strand-forming zones; stretching the starting material in a subsidiary direction to stretch out, thin down and orient subsidiary strand-forming zones to form subsidiary oriented strands; and stretching the material in a main direction generally at right angles to the subsidiary direction to stretch out, thin down and orient main strand-forming zones to form main oriented strands extending generally at right angles to the subsidiary strands, the stretching being continued until the thinning down extends right through the notional junction zones to aligned main strands on the other sides of the notional junction zones and extends around crotches to respective subsidiary strands so that in the crotches the orientation is in the direction running around the respective crotch, thereby forming oriented junctions with oriented crotches connecting respective main and subsidiary strands. The resultant main direction stretch is substantially greater than the resultant subsidiary direction stretch. At each junction, there is a central or thicker zone, which normally has thinned down less than the mid-points of the main strands. There are zones on either side of the central or thicker zone, which are normally thinner than the junction centre.

The present invention also relates to a biaxially-molecularly-oriented integral plastics material mesh structure of the type having a thickness of not less than about 1 mm at its thickest point, and having substantially greater strength in a main direction than in a subsidiary direction, the mesh structure comprising: main oriented strands extending in the main direction; subsidiary oriented strands extending in the subsidiary direction; and oriented junctions between respective main and subsidiary strands, respective main and subsidiary strands being interconnected by oriented crotches with the orientation in the direction running around the respective crotches, there being at each junction a thicker zone which is substantially thicker than zones on either side thereof each on the axis of a respective subsidiary strand, and which thicker zone has a substantially greater dimension parallel to the main direction than that parallel to the subsidiary direction.

The mesh structures of the invention are for applications in which the main direction is the machine direction, and in which the main tensile force will be applied in the machine direction, and the mesh structures will have substantially greater strength in the machine direction than in the transverse direction; for instance, when the mesh structure is attached to a vertical wall facing, the main tensile force will be at right angles to the facing. The main strands are those that will take the main tensile force, the transverse strands being generally at right angles to the main strands.

It is desirable to orient as much as possible in the machine direction, but the degree of stretch that can be applied in the machine direction is limited by the risk of forming junctions which can crack or split in the machine direction on bending in the transverse direction, or of forming junctions which have marked dips in their central part. Such dips can significantly reduce the transverse direction strength of the mesh structure.

US 4 374 798 and EP-A-0 418 104 disclose methods and mesh structures of the type referred to. US 4 374 798 discloses two-stage stretching of a starting material with a square or rectangular pattern of holes. For convenience in practice, the first stretch was applied in the machine direction and the second stretch in the transverse direction, but the order can be reversed as indicated in the specification. There is a disclosure of a large number of different ways of carrying out the stretching operations. EP-A-0 418 104 discloses two-stage stretching of a starting material with a square or rectangular pattern of holes, the starting material being specially profiled in order to achieve a desired product. The stretches were not equal and apart from one indication to the contrary, the main stretch was the first stretch and was in the machine direction; where the text indicates a possibility of having the main stretch second, there is no indication that the degree of orientation into the junction must be controlled in order to avoid cracking of the product. Although there is a statement that the lateral zones of the junctions can have substantial biaxial orientation, there is no teaching in the text as to how such substantial biaxial orientation can be produced.

### Definitions

"MD" is the machine direction and "TD" is the transverse direction. The MD is the direction longitudinal of the length or roll of mesh-structure produced during manufacture.

The holes in the starting material may be through-holes or blind holes. If the holes are blind, the film or membrane in the hole will either rupture on stretching, or may remain as a thin membrane. Hole sizes are measured between respective tangent lines (see below).

The term "oriented" means molecularly-oriented. In general, when an oriented strand is referred to, the preferred direction of orientation is longitudinal of the strand.

"Uniax" and "biax" mean uniaxially-oriented and biaxially-oriented, respectively. Substantially uniaxially-oriented means that on the surface of the structure, there has been extension of the material in one direction but no substantial resultant extension of the material in the direction at right angles.

The terms "thick" and "thin" refer to the dimension normal to the plane of the material or mesh structure. Unless otherwise specified, the thickness is the distance between the extreme faces at the thickest point. However, raised edges or tapered or feathered edges are ignored, as well as any minor grooves in the surface and any irrelevant projections from the surface. Where the thinning down of one part is compared to that of another part, the thinning down is the percentage thinning down (related to the original thickness) and not the absolute measure of the thinning down.

The "width" is the dimension at right angles to the major axis of the zone in question, and "narrow" relates to this dimension.

A "junction thicker zone dip" is a dip on the main direction centre line of the n.j.z. (defined below) or of the junction, there being on each end of the dip thicker parts on the same centre line and within the same n.j.z. or junction.

A "tangent line" is a notional line tangent to the ends of the holes on either side of a strand-forming zone. In extruded starting materials and in embossed or moulded starting materials, the holes are not normally vertical sided (i.e. perpendicular to the plane of the starting material). For extruded starting materials, as a good approximation, the tangent line can be taken as the notional line tangent to the plan view see-through, i.e. the minimum hole size as viewed normal to the plane of the material, but ignoring film or feathered edges. For embossed or moulded starting materials, where the holes normally have sloping sides, as a good approximation, the tangent line can be taken as the notional line tangent to a point half way up the side of the hole, or, if the slope is different on each face, tangent to a point half-way between points half way up the respective slopes, films or membranes in blind holes being ignored.

The "notional junction zone" or "n.j.z." is the zone of the starting material defined between the respective pair of tangent lines parallel to the MD and the respective pair of tangent lines parallel to the TD. In the mesh structures, the notional junction zones are the zones of the surfaces of the structure which have been formed from the notional junction zones of the starting material.

"Strictly uniplanar" means that the material or structure is symmetrical about a median plane parallel to its faces. In general, a uniplanar starting material will give a uniplanar structure when stretched.

A "strictly flat" starting material has monoplanar, parallel faces.

The "starting material" is the material immediately before initiation of the first stretch.

"Punch-out" is the ratio of the maximum dimension of the holes (ie between the respective tangent lines) in a specified direction to the pitch of the holes in the same direction, whether or not the holes have been formed by punching or by another procedure which may not even involve material removal.

An "overall stretch ratio" is the stretch ratio applied to the whole length of the material. A "resultant stretch ratio" is the stretch ratio in the final product, after any contraction that may have occurred. A "resultant area stretch ratio" is the product of the overall resultant stretch ratios in the MD and TD. All stretch ratios given for the notional junction zone or junction are as measured on the surface in the MD, normally on the junction centre line. Where the stretch ratio (or orientation) is stated for a specific point, it will have been determined over a finite length or zone centred on the point. All resultant stretch ratios are as measured after relaxation or after annealing if annealing is carried out.

"Erosion" is the progression of substantial orientation from a zone that is already substantially oriented into a zone that is not oriented or not substantially oriented, normally indicated by an abrupt increase in thickness.

"PP" is polypropylene, "PE" is polyethylene, "HDPE" is high density polyethylene, and "PET" is polyethylene terapthalate (polyester).

The term "soil" includes rocks, stones, gravel, sand, earth, clay or aggregate held by a binder such as asphalt.

The "strength" of a mesh structure is the maximum MD strength per unit width, as measured in a normal tensile test, for instance in kN per metre width.

The "economy rating" is the MD strength of the product per unit mass per unit area per unit mass, measured as kN per m per kg per m² in the MD.

"Truth lines" are parallel lines applied (normally by printing or drawing) to the starting material, normally in two directions parallel to the MD and TD respectively.

The "45° point" is a point on a line passing through the centre of the junction at 45° to the MD.

### The Invention

After twelve years of commercial production of mesh structures of said type by methods of said type, a procedure has been discovered which significantly increases the MD stretch ratio without introducing unacceptable crackiness or a marked dip in the centre part of the junction. The invention provides methods as set forth in Claims 1 or 23, mesh structures as set forth in Claims 16, 17 or 18, and a composite civil engineering structure as set forth in Claim 24.

The tensile properties per unit width of mesh structure can be considerably improved. Economy ratings of 255 and 316 kN/m/kg/m² can be achieved with HDPE and PP respectively. The mesh structures, when produced in a continuous manufacturing process, can be very uniform throughout (except perhaps at the edges) with very similar junction forms and very similar junction stretch ratios. The mesh structures can have high creep resistance because of the high degree of orientation in the junctions and the more uniform orientation both within the individual junctions and throughout the structure, giving very good stress transmission paths.

The invention enables the TD punch-out to be reduced to as low as about 20%, 25% or 30% without significant danger of splitting in manufacture or significant crackiness in the finished mesh structure. The TD punch-out and the reduction in width of the n.j.z. both affect the width of the final product. Lower TD punch-out gives greater MD strength per unit width. However wider but lower strength materials can be produced by having greater TD punch-out and also by applying less MD stretch (and therefore less TD contraction). In general, wider products can be obtained with suitable hole sizes and pitching and suitable TD stretch ratios.

In general, resultant overall MD stretch ratios of more than about 5:1 or 6:1, and resultant area stretch ratios of more than about 5:1, 8:1 or 10:1, can be obtained. The resultant stretch ratios at the mid or thinnest points of the main (ie MD) strands can be more than about 7:1, 8:1, 9:1 or 11:1. Using HDPE, it is possible to achieve resultant MD overall stretch ratios of about 7:1 or more, and resultant MD stretch ratios of about 6:1, 8:1, 10:1 or more at the mid-points of the main strands and about 3.5:1 or 4.5:1 or more on the surface of the centre of the junction. Using PP, it is possible to achieve resultant MD overall stretch ratios of about 7:1 or 8:1 or more. Using PET, it is possible to achieve resultant MD overall stretch ratios of about 3.5:1 or more with resins currently available. Polyolefins, e.g. HDPE or PP, stretch to ratios two or three times the PET stretch ratios. In general, the resultant MD stretch ratio may be at least about twice that in the TD and at least about 2.5, 3, 4 or 5 times for polyolefines; if the TD pitch is less in the final product than in the starting material, the resultant area stretch ratio will be less than the resultant MD stretch ratio.

### Stretching Behaviour

During at least that part of the MD stretch in which the n.j.z.'s are substantially extended, substantial contraction is ensured in the TD, and the main strand-forming zones thin down to a substantial or high degree before the n.j.z.'s begin to thin down, and the thinning down of the main strands reaches or passes into the ends of the n.j.z.'s.

The TD stretch orients the transverse strand-forming zones and the wider zones at or adjacent the ends of the transverse strand-forming zones whilst having little or no effect on the n.j.z.'s. In the MD stretch or stretches, the main strand-forming zones can be drawn to a considerable extent before the n.j.z. starts to extend, i.e. a substantially greater stretching force or time is required to extend the n.j.z. than the main strand-forming zones, and then either t,he ends of the n.j.z. begin to extend or the whole n.j.z. extends as an entity - the n.j.z. and particularly its central part does not substantially neck down to form a substantial dip, i.e. the n.j.z. does not yield significantly from its centre. The main strands may have stretched out fully before the n.j.z. extends significantly or the stretch in the main strands may continue during or after stretching the n.j.z.

As stretching is continued, the whole of the n.j.z. is oriented and there is a relatively large extension of the n.j.z. As substantial TD contraction is ensured, the whole of the n.j.z. will always be substantially narrower in the biax product than in the starting material. The width reduction may be at least about 30, 40 or 50%. In effect, the substantial narrowing of the n.j.z. indicates that there has been a substantial increase in length of the n.j.z. and uniaxial orientation of the junction central or thicker zone, consequent in part on the substantial TD contraction.

A central or thicker zone which is formed at each junction corresponds generally to the n.j.z., particularly as regards the MD ends. The sides of the central or thicker zone may include some material which was originally in the ends of the transverse strand-forming zones.

### Profile and Orientation of Junctions

The central or thicker zone, or the n.j.z., in the product preferably has no part substantially wider than its end portions, and more preferably has generally parallel sides in the MD, though a slight narrowing, bulging, or cupid's bow is not excluded. A section through the final junction along the central axis parallel to the MD and normal to the structure is significantly different from that along the axis parallel to the TD. The junction centre may have thinned down more than the transverse strand mid-points.

The central or thicker zone is substantially oriented substantially uniaxially in the MD. This provides continuous, substantially uniaxial orientation in the MD from end to end of the mesh structure, and the main strands and said central or thicker zones form parallel ribs running right through the mesh structure. With a strictly flat starting material, the centres of the junctions have not thinned down substantially more, i.e. are not substantially more oriented, than any other part of the n.j.z. on the MD centre line. In more general terms, there is no substantial dip in the central or thicker zone. Preferably the junction centre has thinned down least, i.e. is the least oriented part (and will be the thickest part of the junction if the starting material was strictly flat), but it could in some circumstances thin down slightly more, i.e. be slightly more oriented, than one or both ends or end portions of the n.j.z.. There is a relatively uniform degree of orientation throughout the length of the n.j.z. along the MD centre line. Thus the stretch ratio at one or both ends or end portions of the n.j.z. is preferably not more than about 100%, 60% or 50% greater than that at the centre and preferably not more than about 40% or 20% greater (eg if the stretch ratio at the centre is 5:1, a stretch ratio at the ends of 6:1 is 20% greater). The reduction in thickness at one or both ends or end portions (expressed as a percentage) is preferably no more than about twice or 1.75 times that at the centre, or up to about 2.5 times for PP. At least on the surface, there may be a progressive increase or substantially no increase in the MD stretch ratio from the centre of the n.j.z. to the ends or end portions of the n.j.z. (as considered in the MD), and even a progressive increase to the centres of the main strands, and there may be no abrupt change in the rate of increase. The n.j.z. or junction extends a significant distance into what was traditionally called the strand.

The central or thicker zone may be at least about twice or 2.5 times as long as it is wide. The central or thicker zone may have reentrants at each end, in that more plastics material has been eroded from the centres of the ends than from the sides of the ends. The reentrants may be extensive, each extending for over about one third of the length of the thicker zone so that the thicker zone has a generally H shape.

### The Biax Zones

The MD stretch puts substantial MD orientation into the zones at or adjacent the ends of the transverse strand-forming zones, which have already been substantially oriented in the TD, thereby forming substantially biaxial orientation in such zones - in this way, the TD stretch affects the orientation behaviour of the structure during the latter part of the MD stretch; such zones are on either side of the central or thicker zone and on the axes or centre lines of the respective transverse strands, and can be relatively small. Such biax zones give high resistance to cracking when flexing in the TD. These zones are wholly or mainly outside the n.j.z., at least on the surface, and are between the ends of the transverse strands and the junction central or thicker zone, though they are drawn towards the junction during the final stretch in the MD. Normally the biax zones will be thinner than the junction central zone. Thinner biax zones can give more flexibility transverse to the MD and increase resistance to cracking.

There may be a reduction in thickness when progressing along a transverse strand centre line into the respective biax zone; there is no marked thickening at least until the thicker or central zone is reached.

Oriented crotches are formed between edges of main strands and of respective transverse strands. In general, the material of the crotches has not come from the n.j.z. and thus the crotches do not form part of the junction proper. The crotches may have a thickness of the same order as, or roughly the same as, the transverse strand thickness; for a good approximation, the thickness of the crotches can be measured inwards of any tapering or feather edge or raised edge, but more accurately, as the crotches will be uniaxially oriented, X-ray diffraction tests can be performed and the thickest part of the uniaxially oriented zone adjacent the edge can be taken as the crotch thickness measurement; if the crotches are of differing thickness, the thinner crotch Is measured. The crotches will normally be substantially thinner than the junction central zone. The biax zone can at its thinnest point, or at the thinnest point along the axis of the respective transverse strand, be thinner than the 45° points of the crotches around the respective zone, but substantial dips or thin parts should be avoided, the thickness of the biax zone being not less than about 40%, 50% or 60% or 70% of the thickness of the (thinner) crotch 45° point. If a biax zone is too thin, the thin part can be split and act as a tear starter; once a tear has started, it may propagate along the respective strands and cause the structure to split apart. The absence of tear starters is important regarding resistance to tensile stress both in the MD and in the TD. Once the structure has been say embedded in soil, resistance to MD stress is the most important requirement, but the structure will be subjected to TD stress both during manufacture and when being handled and also as the soil is consolidated. Furthermore, a biax zone can be caused to split by granular material when consolidating soil. The crotches merge gradually with the biax zones, as seen in section normal to the plane of the structure along a line passing through the centre of the junction at 45° to the MD; in other words there is no marked change in gradient and there is a smooth transition as one passes from a crotch into the biax zone, the rate of change of thickness not changing rapidly; visually, the crotches are not in the form of filaments markedly differentiated from the biax zones.

### TD Stretch

The stretch in the TD should not be so great that while stretching in the MD, the unoriented or only slightly oriented n.j.z. is not strong enough to resist significant yielding in its centre part before its end parts extend. The maximum amount of orientation which can be applied during the TD stretch is that which ensures that less oriented material (i.e. material less oriented than that in the remainder of the transverse strands) still remains at the ends of the transverse strand-forming zones and adjacent the n.j.z., and ensures that the n.j.z. does not yield significantly in the TD though some erosion can occur where the n.j.z. meets the transverse strand-forming zones. This avoids substantial necking down of the n.j.z. and the formation of a substantial dip in the centre part of the n.j.z. during the final stretch. Nonetheless, the amount of stretch in the TD must be sufficient to allow said biax zones to form; i.e. at the end of the stretching operation in the TD, oriented material must be present adjacent though not necessarily at the ends of the transverse strands, such oriented material being oriented in the TD. The biax zones formed during the final stretch comprise said less oriented material. If a two-stage procedure is being carried out (see below), the maximum amount of orientation which can be applied during the first stretch is that which in the second or final stretch still allows substantial orientation or thinning down of the main strand-forming zones before the n.j.z. extends, though some erosion can occur where the n.j.z. meets the main strand-forming zones; in general terms, the maximum orientation is that amount which ensures that the cross-sectional area in the region of the junction in the plane of the TD is stronger than the cross-sectional area of the main strand-forming zones at their yield points.

When stretching in the TD, the orientation can go beyond the tangent line, but not too strongly. The stretch in the TD can be such that the orientation just penetrates right through the n.j.z. from one transverse strand-forming zone to that on the other side of the n.j.z., or such that the penetration is greater than 25% of the width of the n.j.z., on each side on the surface of the mesh structure. However, it is not necessary to go beyond the tangent line or even to within a distance of the tangent line equal to about 10%, 25% or 40% of the thickness of the material at the tangent line (or about 5%, 10% or 20% of the width of the n.j.z.). The overall stretch in the TD can be up to about 2.5:1, 3:1, 4:1 or 5:1, or more.

### MD Stretch

The main strands can be stretched substantially or to a high degree (e.g. the mid-points or thinnest points of the main strands can thin down by at least about 50% or 60%) before the n.j.z.'s begin to stretch substantially.

The n.j.z. or junction, as measured from end to end, is stretched to a ratio of at least about 2.5:1 in general; for PET about 2.5:1 may be the maximum; for polyolefins such as PP and PE (and more particularly HDPE), and in general, the n.j.z. or junction can be stretched to a ratio of at least about 3.5:1, 4:1 or 4.5:1, and can be stretched to a ratio of at least about 5:1 or 5.5:1. One or both ends or end portions of the n.j.z.'s, or of the junction central or thicker zone, are preferably stretched to a ratio of at least about 4:1 or 5:1. The junction or n.j.z. centre can have a lower degree of orientation (about 3:1 to about 5:1 or more) than the strand mid-points. The thickest part, e.g. the centre with a strictly flat starting material, of the n.j.z. or junction reduces in thickness by at least about or more than about 30%, and thickness reductions can be from about 40% up to about 50% or 60% or more. The stretch ratio at the mid-points of the main strands is frequently not more than about 233% or 150% or 100% greater than the stretch ratio at the notional junction centre, particularly for PE (and more particularly HDPE) or PET. If the starting material is strictly flat, the ratio of the thickness of the thickest point of the junction to the thickness of the mid-point of the main strands can be not more than about 2.5:1 or 2:1. The ratio of the thickness of the thickest point of the junction to the thickness of the mid-point of the transverse strands can be not more than about 5:1, 4:1, 3:1, 2.5:1 or 2:1, but the ratio can be as low as for instance nearly 1:1 or lower, ie the transverse strand mid-point could be thicker than the thickest point of the junction; with profiled starting materials, the ratio could be considerably higher, e.g. 10:1 or 8:1 or 6:1.

The stretch in the MD, at least when applying substantial stretch to the n.j.z., will have just the natural restraint of the equipment, permitting a contraction in the TD of for instance up to about 20, 25, 30, 40 or 50% or more; however, there is a relationship between the draw length and the width - if the draw length is too short in relation to the width, some anomalous junctions may be produced in the central region of the structure due to insufficient contraction. During the contraction, material is pulled towards the junctions from material which was originally at the ends of the transverse strand-forming zones as the n.j.z.'s lengthen in the MD. This also has the effect of reducing the resultant overall stretch ratio in the TD, and the TD pitch may even be less in the final product than in the starting material, ie there may be a resultant contraction in the TD.

### Stretching Procedure

In general, the final stretch will be a MD stretch although a small final, second TD stretch could be applied.

### Two-Stage Procedure

In a simple procedure, the starting material is given a first stretch in the TD, followed by a second stretch in the MD.

### Three-Stage Procedure

In a preferred procedure, the starting material is given a first stretch in the MD, followed by a second stretch in the TD and a third stretch in the MD (termed a three-stage procedure herein). If this is done, less power is required in the stretcher used for the TD stretch as the material is lighter when it reaches this stretcher; furthermore, the stretch ratio applied in the third (MD) stretch can be lower, say 1.2:1, 2:1, 2.5:1 or 3:1 overall, and high production speeds can be maintained whilst keeping the rates of strain within acceptable limits. The maximum orientation which can be applied during the first, MD stretch is that which still allows the transverse strand-forming zones to yield and orient in the second or TD stretch without significantly yielding the n.j.z., though some erosion can occur where the n.j.z. meets the transverse strand-forming zones.

In general terms, the maximum orientation is that amount which leaves the MD cross-sectional area of oriented or lesser oriented material in the region of the junction still stronger than the minimum cross-sectional area of the transverse strand-forming zones. The degree of stretch should not be such that the third, MD stretch cannot be carried out in the manner described or such that the product of the invention cannot be obtained. It is desirable that during the first, MD stretch there should be no substantial extension of all parts of the n.j.z., but there can be some penetration of orientation into the middle of the n.j.z. Preferably the first, MD stretch is such that the thinning down or orientation does not proceed substantially beyond the respective tangent line. However, the main strands may have thinned or oriented in the first, MD stretch to such an extent that in the final, MD stretch, the n.j.z.'s extend before any further thinning or orientation of the main strands, and no further thinning or orientation of the main strands need occur.

### Manufacturing Practice

In normal manufacturing practice, the mesh structure is formed as a long MD length which is rolled up. It is not necessary to cool between stretches, and all or any two or any three stretching operations can be carried out in-line without cooling.

### The Holes

The holes can be formed in any suitable manner, for instance by punching, moulding or embossing or during extrusion, for instance as described in FR 2 131 842 or US 3 252 181. It is desirable to have a hole shape which leaves material in the corners or spandrels (i.e. outside the notional junction zone) to assist in forming the biax zones and also forming good crotches around the junctions in the mesh structure and reduce any tendency of the ends of the transverse strands to split or become cracky during the final MD stretch; suitable hole shapes include barrel-shapes and quasi-elliptical. In general terms, by having the ends of the transverse strand-forming zones widening out, the zones yield during the TD stretch at a point well spaced from the ends (from the respective tangent lines), and better control of the TD orientation can be achieved; however for such control, the transverse strand-forming zones should not be too wide (MD dimension). If the width of the transverse strand-forming zones or of the end portions thereof is too great, splits may occur adjacent the ends of the transverse strands when stretching in the MD - in effect, the ends of the transverse strands are pulled apart in the MD. On the other hand, if the width of the transverse strand-forming zones is too small, the biax zones may not be formed. As the junction shear test results are better with wider transverse strands, the transverse strand-forming zones may have the maximum width with which satisfactory orientation is achieved.

In the preferred starting material, all the holes are on a substantially square or rectangular notional grid. However, the invention is also applicable to starting materials having a suitable more complex pattern of holes in which all the holes are not on the same square or rectangular grid.

### Starting Materials

The starting materials need not be strictly flat and can be for instance generally as disclosed in EP-A-0 418 104. Furthermore, the starting materials need not be substantially uniplanar. If the n.j.z.'s are thicker than the ends of the transverse strand-forming zones, or are offset from the ends of the transverse strand-forming zones (as seen in section taken in the TD), the degree or rate of thickness or offset change (e.g. with a sloping surface) must not be so great that biaxial orientation is not achieved in said biax zonesa rapid or overlarge change could so reduce the restraining effect of the end of the transverse strand as to cause predominant uniaxial orientation (in the MD) in such a zone.

The starting materials are preferably not substantially oriented, though melt flow orientation can be present. The starting material can be any suitable thermoplastics material, for instance PET, or polyolefins such as HDPE, PP and copolymers of HDPE and PP. Skins or surface layers can be applied, for instance for ultra-violet stabilization or to permit lamination.

In one preferred starting material, the main strand-forming zones and the n.j.z.'s are thicker than the transverse strand-forming zones; the starting material can have parallel ribs which comprise the main strand-forming zones and the notional junction zones; the ribs can protrude from one face or both faces of the starting material.

There is available a mesh structure in which the transverse oriented strands are each wholly or partially divided into two generally superimposed strands which may be somewhat displaced relative to each other in the MD, looking at the structure in plan, formed from a extruded starting material in which a slot is formed in the MD through the middle of the transverse strand-forming zone. The present invention could be applied to such a starting material. Structures produced in this manner are expected to have the advantages of the invention. They can be considered as having junctions, transverse strands and biax zones in accordance with the invention.

Whatever the form of the starting material, the main strand-forming zones can have narrower parts to provide yield points, for instance as described in US 4 590 029 or in US 4 743 486; this allows the material to be more easily stretched uniformly to a relatively low stretch ratio in the first, MD stretch of a three-stage procedure. To provide yield points in the ribbed starting material referred to above, the holes can cause the ribs to be somewhat narrower in the main strand-fording zones.

The starting materials are sufficiently thick for the mesh structures to be used as geogrids, e.g. of a thickness of not less than about 2, 2.5 or 3 mm at its thickest point or at least about 4 or 6 mm, and thicknesses of up to 10 mm or more can be employed, particularly if the three-stage procedure is used. Roughly, the maximum thickness reduction that can be expected in normal production is about 50% or 60% or more, and thus starting material thicknesses of 2, 2.5 or 3 mm will produce products whose thicknesses may be respectively about 1, 1.25 or 1.5 mm, or less. It is believed that at least for the plastics materials commonly used for mating mesh structures, the behaviour of the material alters at smaller thicknesses, and that one will not necessarily achieve a structure like that of the invention using a starting material which is significantly thinner than those contemplated herein, a minimum starting material thickness of 2 mm being taken as a safe value for conventional starting materials, stretching temperatures and stretching rates.

### Testing

As the behaviour of the starting material varies with many factors such as the resin used, the thickness, the stretching temperature, the hole shapes and the hole pitches, test pieces should be made to ascertain whether the desired orientation behaviour is achieved.

Laboratory samples can be produced and tested before carrying out tests on a production line. The application of truth lines greatly assists in observing the orientation behaviour.

### Preferred Embodiments

The invention will be further described, by way of example, with reference to the accompanying drawings, in which:-
Figure 1 is an isometric projection of a first starting material;
Figure 2 is a plan view of the starting material of Figure 1, showing truth lines;
Figure 3 is a plan view of the mesh structure formed when the starting material of Figure 2 is given a first stretch MD, in a three-stage procedure;
Figure 4 is a plan view of the mesh structure formed when the mesh structure of Figure 3 is then stretched TD;
Figure 5 is a plan view of the mesh structure formed when the mesh structure of Figure 4 is then stretched MD;
Figure 6 is a plan view of the mesh structure of Figure 5, but showing contour hatching;
Figure 7 is an enlargement of the mesh structure of Figure 5, showing thicknesses in mm and stretch ratios;
Figure 8a is an enlarged section along the centre line VIIIA-VIIIA in Figure 7;
Figure 8b is an enlarged section along the transverse line VIIIB-VIIIB in Figure 7;
Figure 9 is an enlarged section along the 45° line IX-IX in Figure 7;
Figure 10 is a plan view of the mesh structure formed when the starting material of Figure 1 is given a first stretch TD, in a two-stage procedure;
Figure 11 is a plan view of the mesh structure formed when the starting material of Figure 10 is then stretched MD;
Figures 12 to 14 correspond to Figures 3 to 5, with the same starting material but different stretch ratios, according to a three-stage procedure;
Figure 15 is a section through a second starting material;
Figure 16 is an isometric projection of a third starting material;
Figure 17 is a cross section along the line XVII-XVII in Figure 16;
Figure 18 is an isometric projection of the mesh structure formed when the starting material of Figure 16 is stretched TD then MD, according to a two-stage procedure;
Figure 19 is a plan view of the mesh structure of Figure 18, showing thicknesses in mm and stretch ratios;
Figures 20 to 23 correspond to Figures 16 to 19, but using a fourth starting material;
Figure 24 is a plan-view of another mesh structure;
Figure 25 is a plan view of a fifth starting material, showing thicknesses in mm;
Figures 26a, 26b, 27a and 27b are sections along the lines XXVIA-XXVIA, XXVIB-XXVIB, XXVIIA-XXVIIA and XXVIIB-XXVIIB, respectively, of Figure 25;
Figures 28a and 28b are plan views of the two faces of the mesh structure produced when the starting material of Figure 25 is given a first stretch TD, in a two stage procedure;
Figures 29a and 29b are plan views of the two faces of the mesh structure produced when the mesh structure of Figures 28a and 28b is then stretched MD, Figure 29a showing stretch ratios and Figures 29b showing thicknesses in mm;
Figure 30a is an enlarged section along the centre line XXXA-XXXA in Figure 29b, showing thicknesses in mm;
Figure 30b and 30c are enlarged sections along the transverse and 45° lines XXXB-XXXB and XXXC-XXXC in Figure 29a; and
Figure 31 illustrates some hole shapes that can be used.

The contour hatching, when used, indicates a steep slope (increase in thickness), the hatching lines extending up the slope.

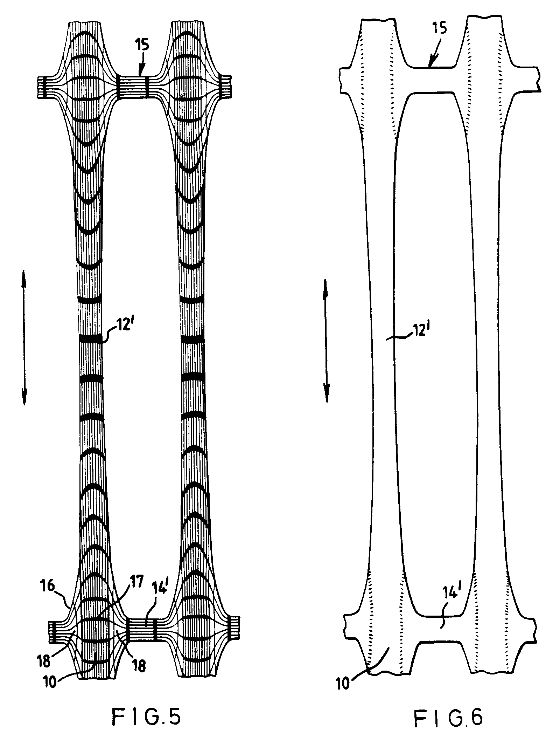

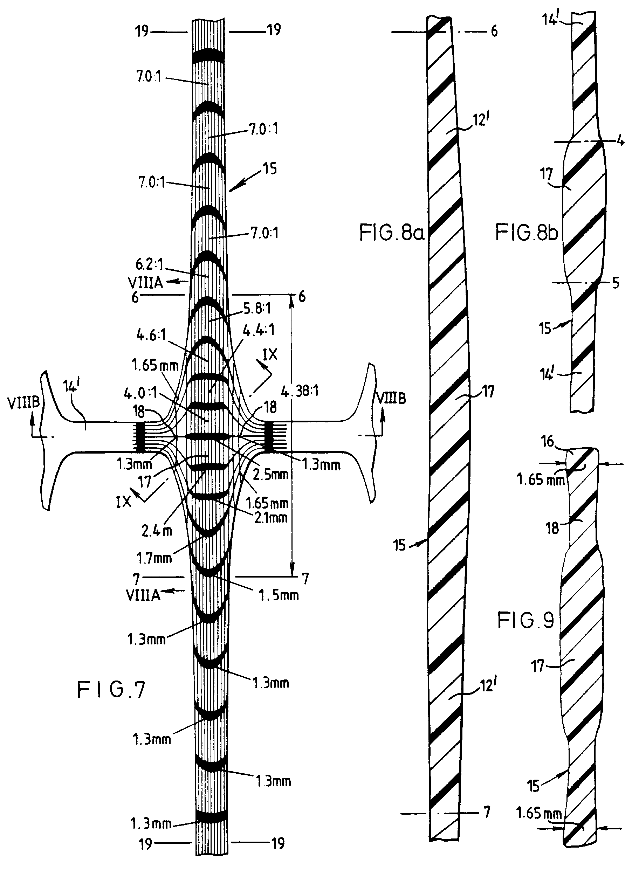

When more than one n.j.z. or junction of a stretched materlat is shown, in general all n.j.z.'s or junctions are shown as identical although in practice there could be small differences between the n.j.z.'s or junctions. The junctions depicted in Figures which show successive stages or enlargements are not generally the same junction and the truth lines will be in somewhat different positions; for instance Figures 5 and 7 can be compared.

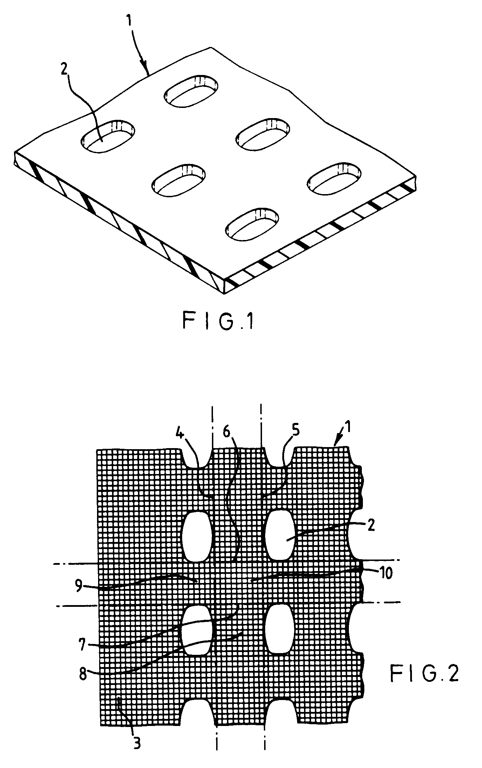

The Table below gives representative details for the materials described in Figures 1 to 14 and 16 to 30c.

### Figures 1 to 9

The truth lines in Figures 2 to 5 indicate the progress of orientation, at least on the surface of the structure. As shown in Figures 1 and 2, a strictly flat starting material 1 is provided with holes 2 on a notional rectangular grid, and a selvedge 3 is shown in Figure 2. The MD is N-S (up and down the sheet) and the TD is E-W (across the sheet). MD tangent lines 4, 5 are shown, as are TD tangent lines 6, 7. There are MD or main strand-forming zones 8 between respective adjacent holes 2 in the TD, and there are TD or transverse strand-forming zones 9 between respective adjacent holes 2 in the MD. A n.j.z. 10 is shown defined between respective pairs of tangent lines 4, 5 and 6, 7.

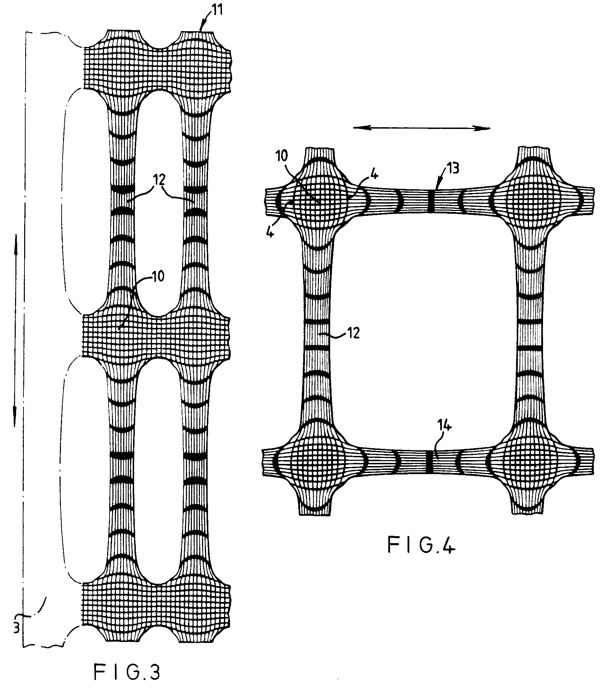

As shown in Figure 3, the starting material 1 is first stretched in the MD, forming a uniax mesh structure 11. It will be seen from the movement of the truth lines that there is penetration of orientation into the n.j.z. 10 from the MD strands 12 which have been formed, but the penetration is not very significant. On the surface, the truth lines have moved on each end of the n.j.z., and they have moved slightly in the central 40% of the length of the n.j.z. 10. The selvedge 3 has been stretched out more or less as a whole - for instance, if a 3:1 stretch overall is applied to the mesh structure, the selvedge thickness would be reduced by about 50%. There is no transverse restraint in the first MD stretch, but as there is no significant penetration of orientation across the n.j.z.'s 10, there is no significant TD contraction.

In order to carry out the second, TD stretch, the respective selvedges 3 are held in the clips of a stenter, to form a first biax mesh structure 13. As shown in Figure 4, the orientation of the TD or transverse strands 14 penetrates into the n.j.z.'s 10, but the penetration does not reach the centre and is not significant. On the surface, the truth lines have moved on each side of the n.j.z. 10, but they have not moved in the central 40% of the width of the n.j.z.10.

Figure 5 shows the final biax mesh structure 15 after a further MD stretch. There was no TD restraint, and substantial TD contraction has occurred, the TD strands 14 shortening to form shorter TD strands 14′ as the MD strands 12 lengthen to form longer MD or main strands 12′. Figure 7 gives thickness measurements as well as indicating stretch ratios in the MD, as calculated from measurement of spacing of the truth lines. The thicknesses are given in mm, mostly to one decimal place.

As can be seen observing the truth lines in Figure 5, the TD strand-forming zones 9 have been stretched out, thinned down and oriented to form the TD oriented strands 14′. The MD strand-forming zones 8 have been stretched out, thinned down and oriented to form MD oriented strands 12′ extending at right angles to the TD strands 14′. As shown in Figure 3, the MD strands 12 oriented to a substantial degree before the n.j.z.'s 10 began to thin down. In Figure 5, the thinning down of the MD strands 12′ passed into the ends of the n.j.z.'s 10 and the stretching was continued until the thinning down extended right through the n.j.z.'s 10 to aligned MD strands 12′ on the other sides of the n.j.z.'s 10. Furthermore, crotches 16 were created interconnecting the adjacent edges of respective MD and TD strands 12′, 14′, and the orientation passed around the crotches 16 in the direction running around the respective crotch 16. Stretching was continued until the n.j.z. 10 had increased in length in the MD by a significant ratio so that each junction was oriented.

In each junction, there is a central or thicker zone 17 (see Figure 5), which corresponds more or less to the n.j.z. 10 and is substantially thicker than biax zones 18 on either side thereof and on the axis of the TD strands 14′. The thicker zone 17 has a substantially greater dimension parallel to the MD strands 12′ than that parallel to the TD strands 14′ and has generally parallel sides in the MD. As indicated by the difference between the distance between the respective tangent lines 4, 5 and 6, 7 on the starting material 1 and on the biax mesh structure 15, the n.j.z. 10 has increased in length by a ratio of 4.38:1 and the whole of the n.j.z. 10 has narrowed down or decreased in width by 51% relative to its original width. The distances were measured on the MD and TD strand centre lines or axes. The whole of the thicker zone 17 is substantially oriented substantially uniaxially parallel to the MD. This can be determined from the large movement of the TD truth lines and from the final position of the MD truth lines; any slight opening out of the TD truth lines after the TD stretch (Figure 4) has been completely eliminated and the MD truth lines have become closer than in the starting material 1, throughout the length of the thicker zone 17. The thicker zone 17 is thicker than the mid-points of the main and transverse strands 12′, 14′. The centres of the n.j.z.'s 10 have not thinned down substantially more than any other part of the n.j.z.'s 10, and may be slightly thicker than the remainder of the mesh structure 15. The biax zones 18 are thinner than the TD strands 14′, are thinner than the 45° points of the crotches 16, and merge gradually with the crotches as seen in the 45° section of Figure 9. Figure 9 shows where the crotch 45° point thicknesses are measured. The rate of increase of thickness as one passes from the MD strand 12′ to the centre of the junction is regular and not very rapid or abrupt so that the orientation of the n.j.z. 10 is relatively uniform - the slow increase in thickness can be seen from the stretch ratios given in Figure 7 and from Figure 8a. There is continuous uniaxial orientation in the MD from end to end of the mesh structure 15.

In Figure 7, the MD strand mid-points are indicated by the lines 19.

### Figures 10 and 11

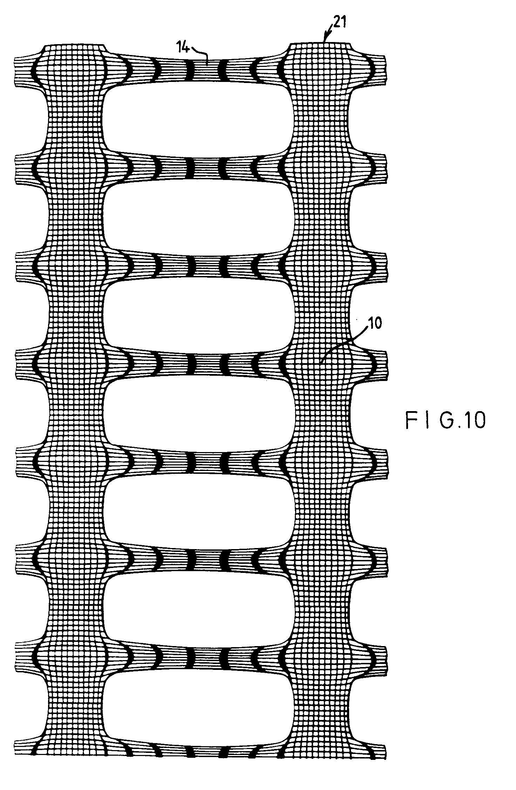

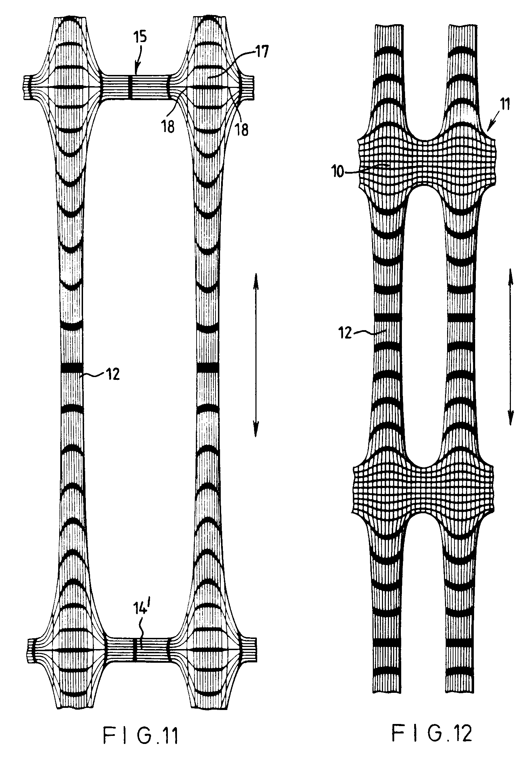

Figures 10 and 11 show an alternative two-stage procedure using the starting material of Figures 1 and 2, in which there is just an initial TD stretch to form a TD oriented structure 21 followed by a final MD stretch. The junction form of the final mesh structure 15 (Figure 11) is similar to that shown in Figures 5 to 9.

### Figures 12 to 14

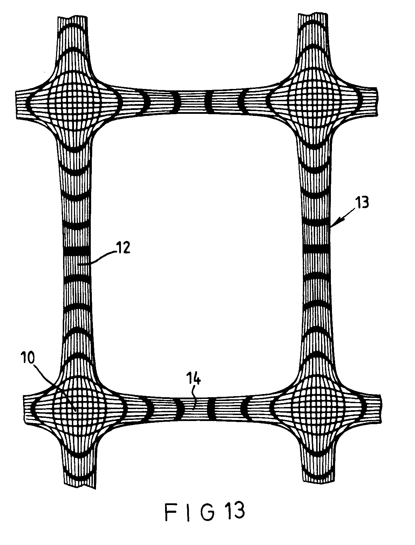

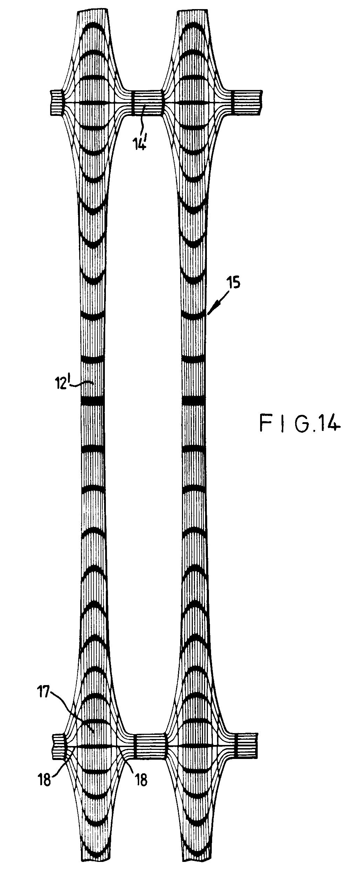

The three-stage procedure shown in Figures 12 to 14 corresponds to that shown in Figures 3 to 5, using the starting material of Figures 1 and 2. However, in Figure 12, the first, MD stretch has been carried out to such an extent that the orientation has penetrated right through the n.j.z. 10, at least on the surface. In the second, TD stretch (Figure 13), the TD orientation has penetrated to slightly more than it has in Figure 4. The junction form of the final mesh structure 15 (Figure 14) is similar to that shown in Figures 5 to 9.

### Figure 15

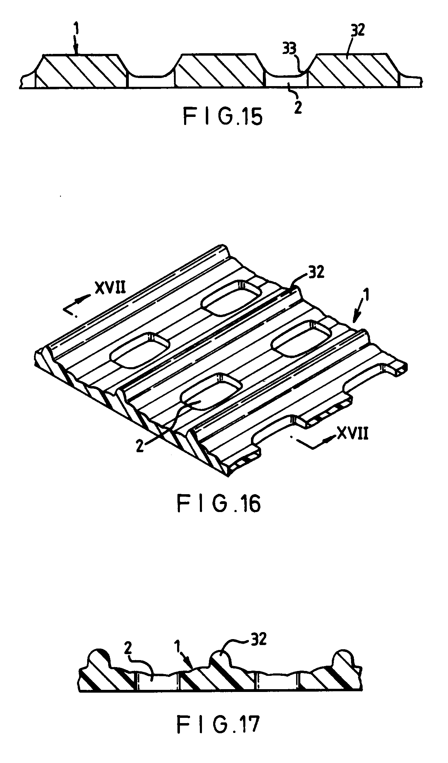

Figure 15 shows a second starting material 1 which is of ribbed form on one face, providing ribs 32 with troughs 33. Holes 2 are formed in the troughs 33, and are slightly wider than the bases of the troughs 33 but do not significantly narrow down the ribs 32. The sloping between the ribs 32 and the troughs 33 is such that the biax zones 18 (see Figure 5) can be formed with suitable biaxial orientation.

### Figures 16 to 19

Figures 16 to 19 illustrate a third starting material 1 and the finished mesh structure 15 in which the starting material 1 has ribs 32 on one face. The ribs 32 run down the centres of the strand-forming zones and n.j.z.'s, but have sloping shoulders so that the biax zones 18 (see Figure 5) can be formed. Although the junctions have MD ribs running along their centres, the general form of the junction and the orientation of the junction are similar to those in Figures 5 to 9.

### Figures 20 to 23

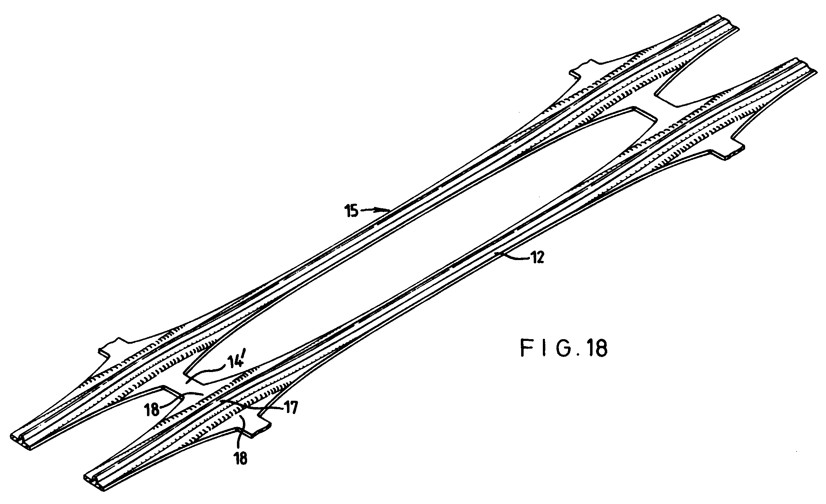

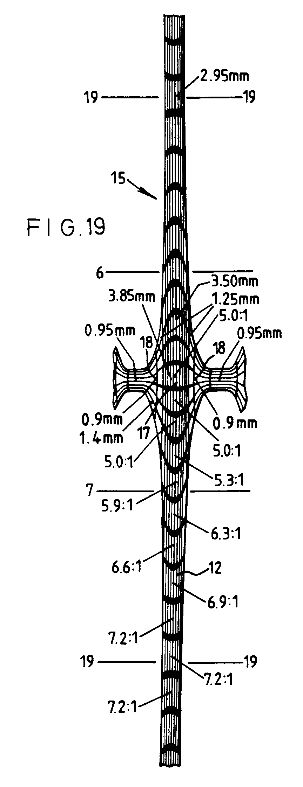

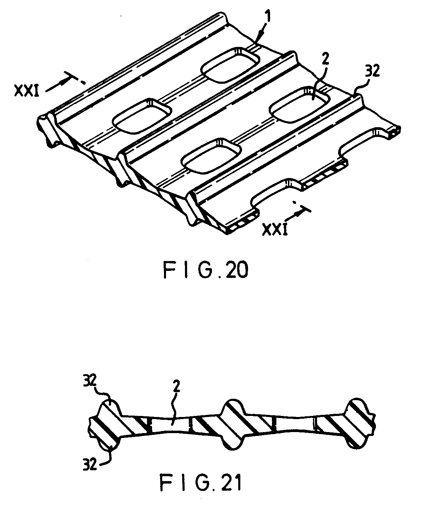

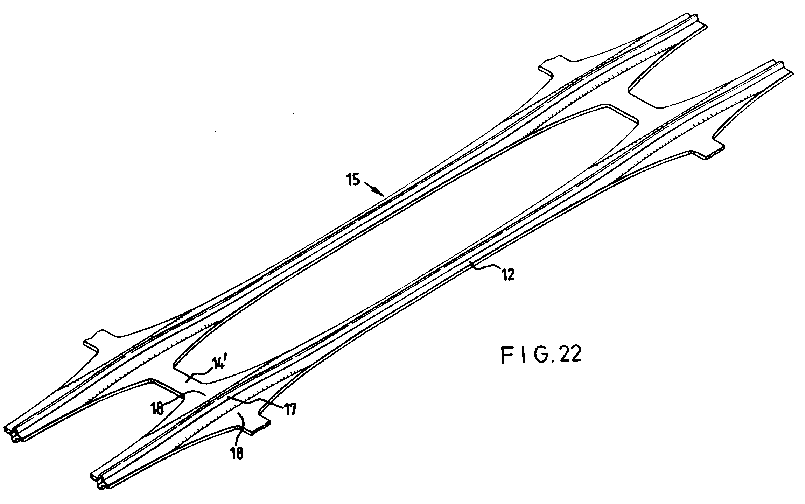

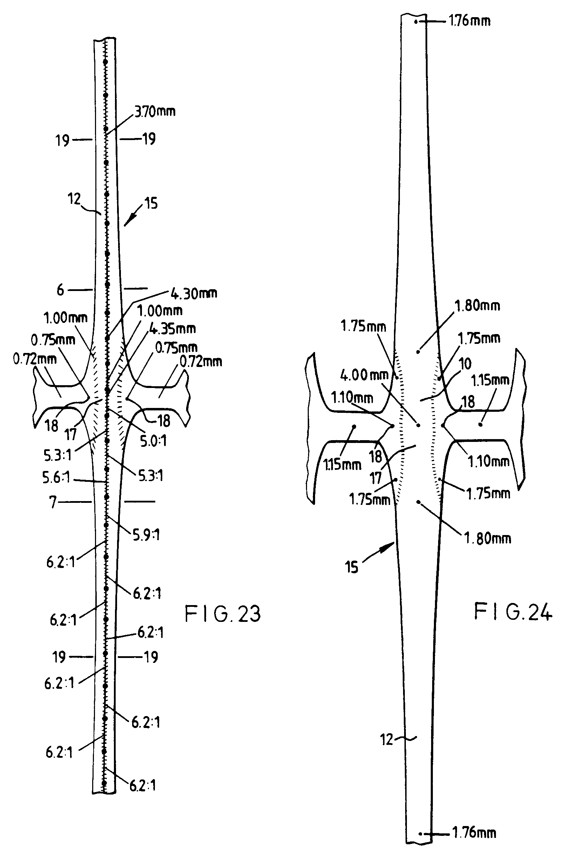

The fourth starting material 1 of Figures 20 and 21 is strictly uniplanar, having the ribs 32 on each face. Otherwise however the starting material is similar to that of Figures 16 and 17, and the final mesh structure 15 (Figures 22 and 23) is similar to that of Figures 18 and 19. Truth lines are not shown on Figure 23, but dots are visible along the MD centre line, corresponding to equi-spaced dots on the MD centre line of the starting material 1. There is only a small variation in stretch ratio along the MD centre line of the junction.

### Figure 24

Figure 24 illustrates the product of Example 8 in the Table below. The sides of the thicker zone 17 are not strictly parallel, and have a shape slightly like that of Cupid's bow, the ends being slightly wider than the centre.

### Figures 25 to 30c

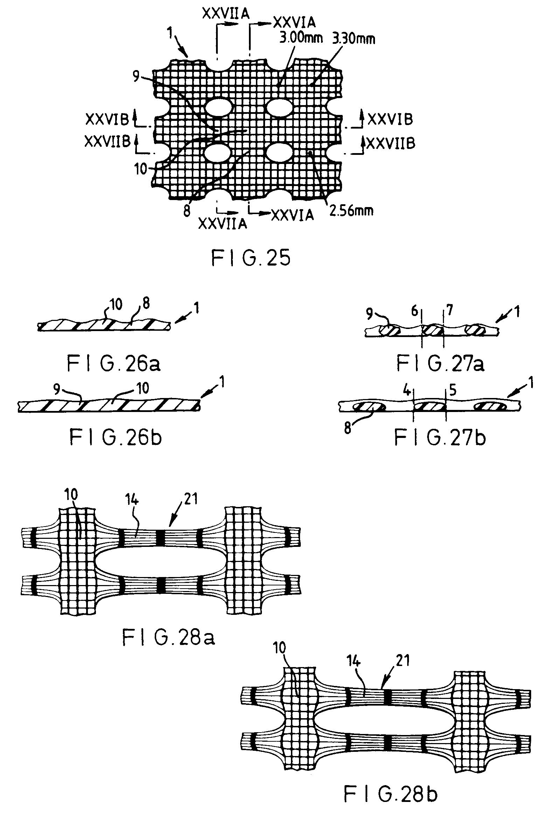

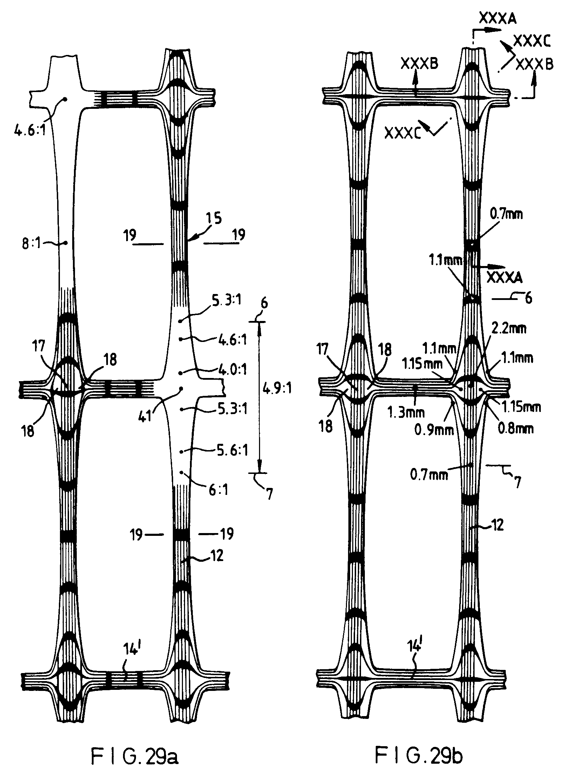

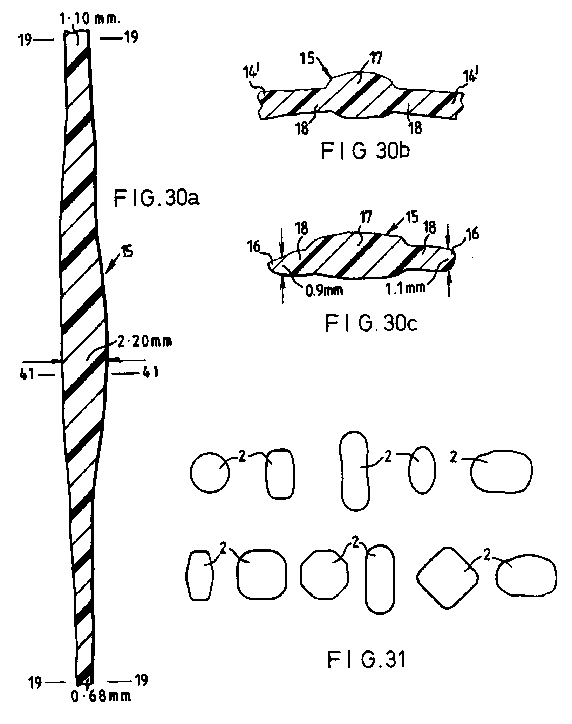

Figures 29a and 29b illustrate both faces of the product of Example 11 of the Table below. An apertured material was formed by extrusion and expanded over a mandrel to provide the starting material 1 of Figures 25 to 27. The starting material 1 is of non-uniform thickness and is not strictly symmetrical about the centre lines of the TD strand-forming zones 9; also, the starting material 1 has not the same profile on each face. However, the starting material 1 is substantially uniplanar. As is shown in Figures 28a to 29b, the stretching behaviour on each face is similar but not identical. As the thickest part of the n.j.z. 10 in Figure 27 was displaced from the centre (mid-point) of the n.j.z. 10 in the MD, the thickest part of the junction 17 in Figure 29 is displaced from the centre 41 in the MD, as shown in Figure 30a. Figure 30c shows that the biax zones 18 merge gradually with the crotches 16 around the respective biax zone 18, and shows where the crotch 45° point thicknesses are measured.

### Figure 31

Figure 31 illustrates some preferred shapes of holes 2. The shapes of the holes 2 leave material in the corners or spandrels for the formation of the crotches 16.

### Examples

A number of Examples are given in the following Table.

In Examples 1 to 3, 6 to 10 and 12, the starting materials were strictly flat; Examples 4 and 5 had starting materials as shown in Figures 17 and 21 respectively; Example 11 had a starting material as in Figure 25; all the holes were formed by punching except for Example 11 where the holes were produced during extrusion. Stretch ratios are overall unless related to a particular zone.

Details of the holes are as follows:
- Circular - 12.7 mm diameter;
- Barrel (Figure 31, second to left of top row) - 9.5 mm TD, 15.9 mm MD;
- Diabolo (Figure 31, centre of top row) - 9.5 mm TD, 25.4 mm MD, 0.5 mm waisting on each side;
- Ellipse - 10 mm TD, 19 mm MD;
- Oval (Figure 31, right of top and bottom rows show two typical shapes, there being a variation in the shapes across the starting material) - 6.4 to 6.6 mm TD, 4.4 to 4.5 mm MD.

In each of the Examples, the mesh structure product had considerably greater strength in the MD than in the TD.

"-" indicates that the relevant measurement or test was not carried out.

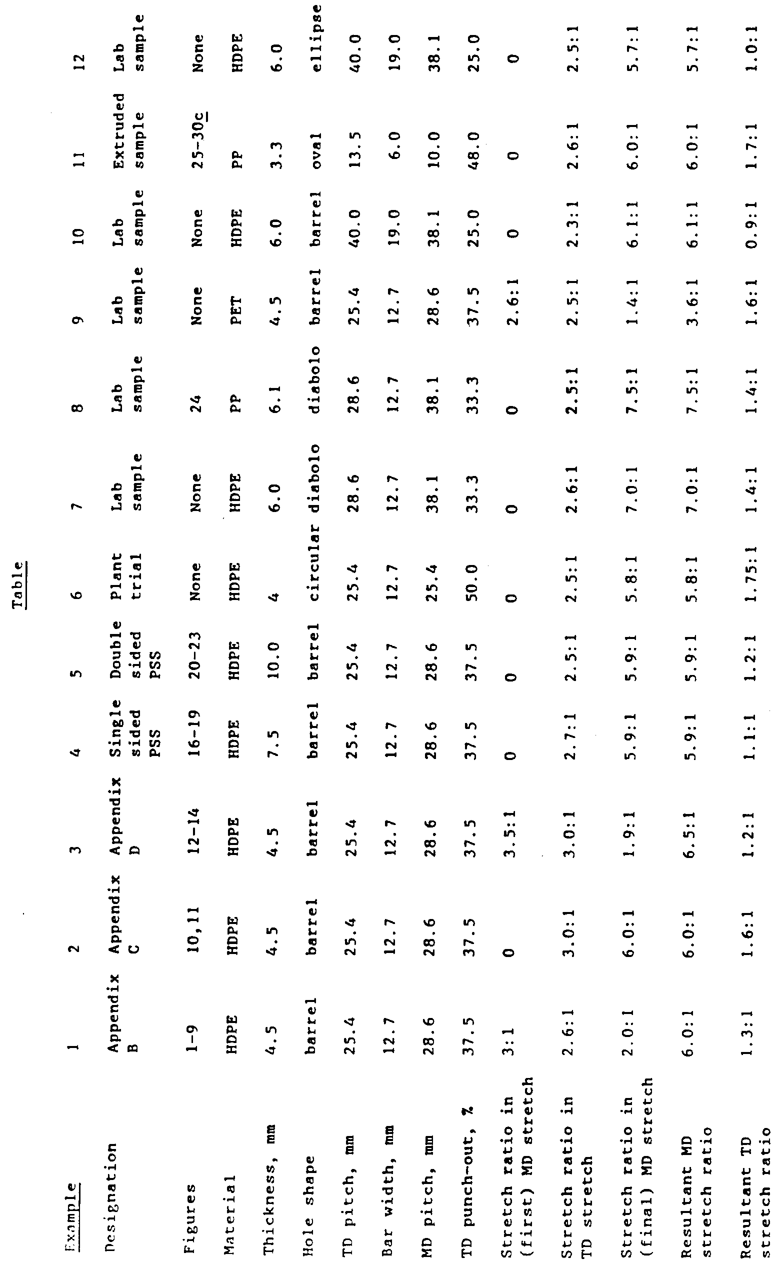

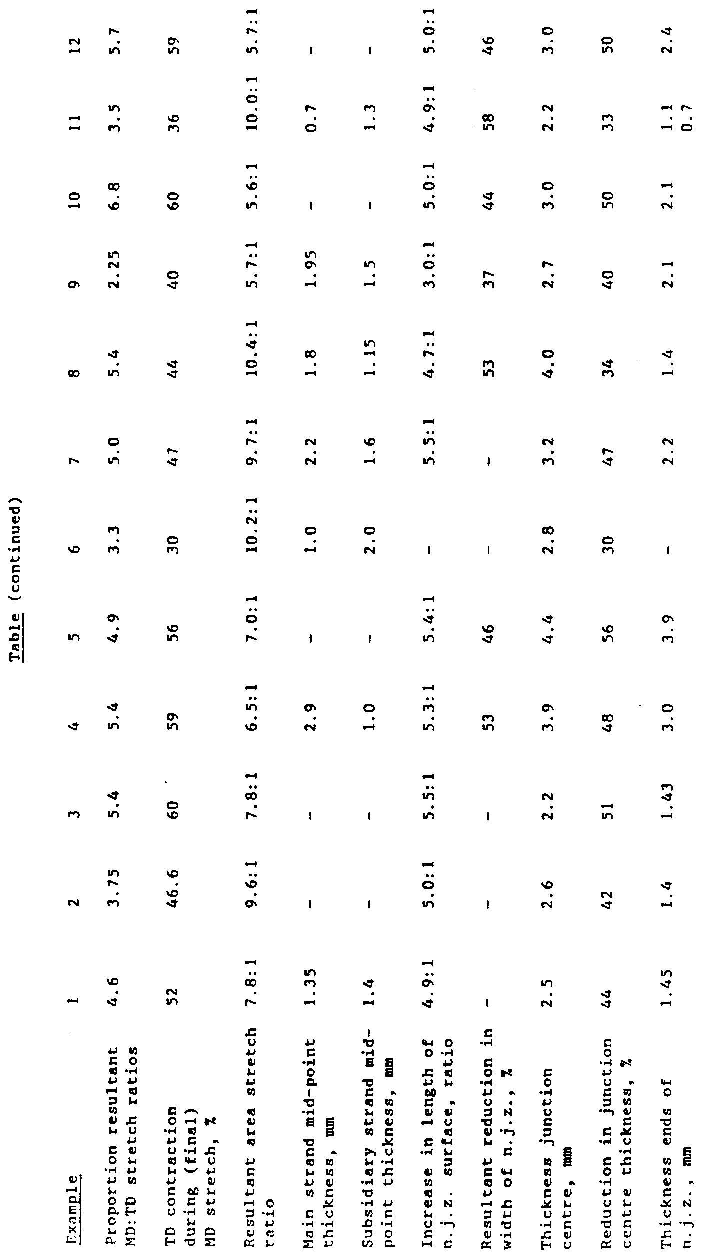

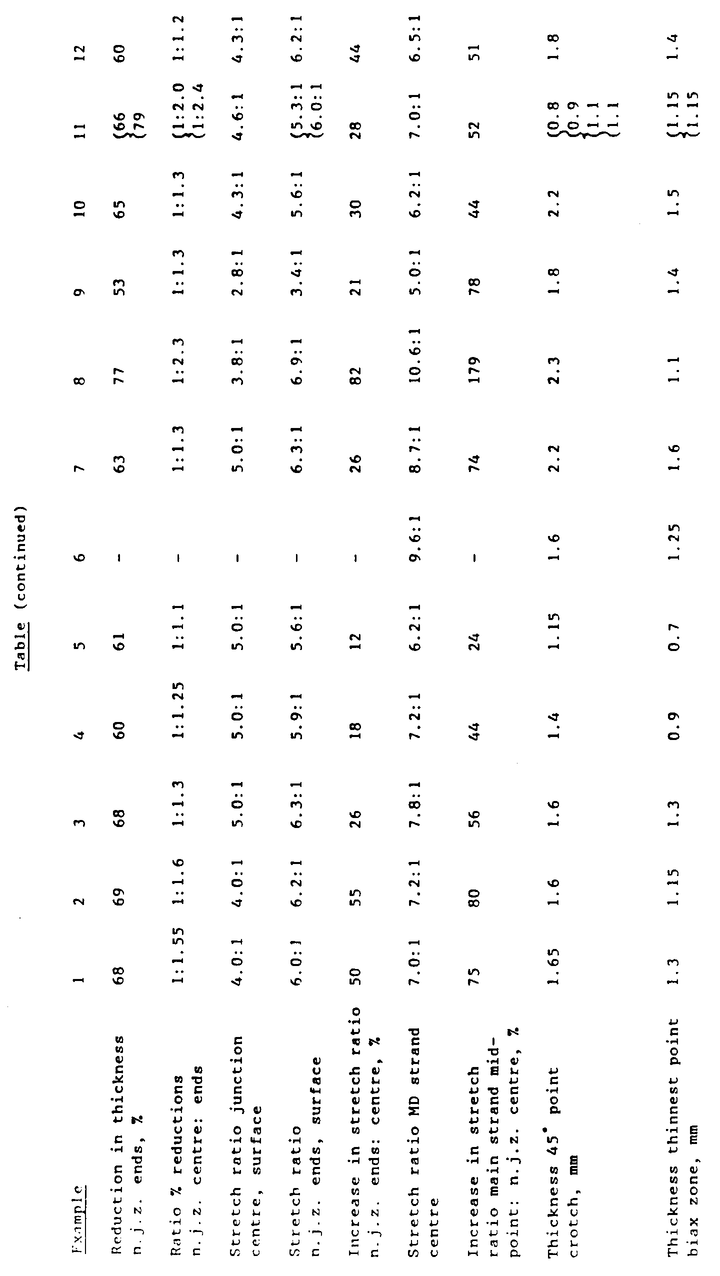

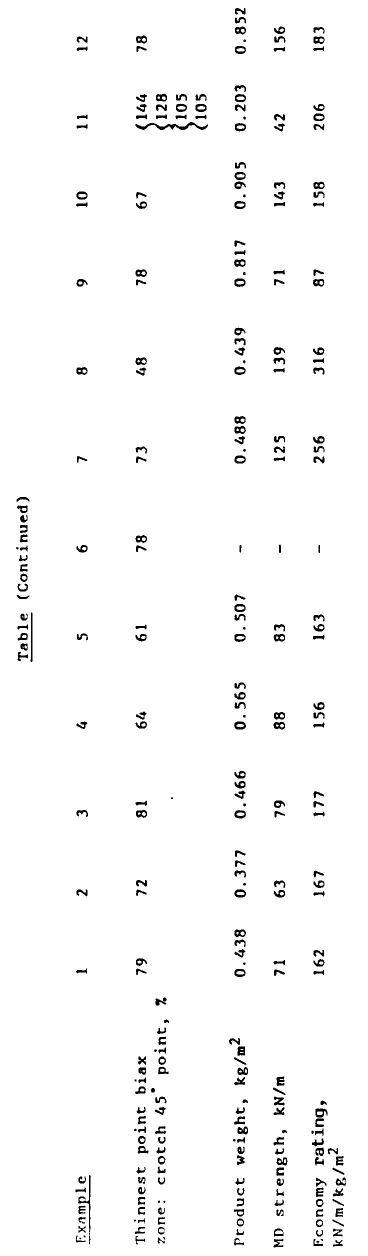

### The Plant

The plant illustrated in Figure 11 of US 4 374 798 can be used for the two-stage procedure. The plant illustrated in Figure 11a of US 4 374 798 can be used for the three-stage procedure if it is followed by a second MD stretcher. The draw length of the final MD stretch for a structure 4 m wide at the beginning of stretching, can be 5, 10 or 15 m or more.

### Uses

The mesh structures of the invention can be used for many different purposes, particularly where high tensile strength is required in the MD. However, the principle use is as geogrids in strengthened or reinforced soil applications such as vertical walls, steep slopes and embankment foundations, forming a composite civil engineering structure having a mass of particulate material and reinforcing provided by the geogrids. Figure 36 of EP-0 418 104 A and the description thereof give suitable examples of earth strengthening or reinforcing applications; the uniax geogrid illustrated can be replaced by a geogrid in accordance with the present invention. In general terms, the flexible, integral geogrids are suitably positioned; for instance in reinforced soil behind a vertical wall or a steep slope, the main strands will be generally at right angles to the wall or slope, as seen in plan. The mesh openings have a dimension in a direction parallel to the main strands which is several multiples of the width of the main strands at their mid-points. In the engineering structure, the geogrids are embedded in the mass of particulate material with portions of the mass below a respective geogrid, portions of the mass above a respective geogrid, and portions of the mass within the mesh openings and interlocking with the mesh openings. In this way, portions of the mass are in direct contact with the upper and lower faces of the geogrids and with the edges of the mesh openings. The geogrids have good slip resistance (interlock) properties with respect to the particulate material and provide good stress transmission paths. Furthermore, the main strands and the junctions in combination have MD tensile deformation properties which allow the particulate material limited deformation under load so that both the particulate material and the geogrids significantly contribute to the overall strength of the engineering structure.

The disclosures of the patent specifications referred to above are included in this disclosure by reference. The present invention has been described above purely by way of example, and modifications can be made within the invention.

## Claims

1. A method of producing an integral, biaxially-molecularly-oriented plastics material mesh structure (15), comprising:
providing a plastics starting material (1) with a thickness of not less than about 2 mm at its thickest point, and having a pattern of holes (2) on a notional, substantially square or rectangular grid defining strand-forming zones (8, 9) between respective adjacent holes (2) and notional junction zones (10) between the strand-forming zones;
stretching the material in the transverse direction to stretch out, thin down and orient transverse said strand-forming zones (9) to form transverse oriented strands (14 or 14'); and
stretching the material in the machine direction to stretch out, thin down and orient main said strand-forming zones (8) to form main, machine direction oriented strands (12 or 12') extending generally at right angles to the transverse strands (14 or 14'), the respective main strand-forming zones (8) thinning down to a substantial degree before the notional junction zone (10) begins to thin down and the thinning down of the main strand-forming zones (8) reaching the ends of the notional junction zone (10), the stretching being continued without any substantial dips being formed in the notional junction zone (10) until the thinning down extends right through the notional junction zone (10) to the aligned main strand (12 or 12') at the other end of the notional junction zone (10) and so that the stretch ratio at the end portions of the notional junction zone (10) is not more than about 100% greater than the stretch ratio at the centre of the notional junction zone (10), until the thinning down extends around crotches (16) to respective transverse strands (14 or 14') so that in the crotches (16) the orientation is in the direction running around the respective crotch (16), until the thickest part of the notional junction zone (10) has reduced in thickness by more than about 30%, and until the notional junction zone (10) has increased in length in the main direction by a ratio of at least about 2.5:1, the whole of the notional junction zone (10) narrowing down substantially, thereby forming an oriented junction and continuously oriented crotches (6) connecting respective main and transverse strands (12 or 12', 14 or 14'), there being a central zone (17) at each junction which is substantially oriented substantially uniaxially in the machine direction to provide continuous substantially uniaxial orientation in the machine direction from end to end of the mesh structure (15), and forming substantially biaxial orientation in zones (18) on either side of said central zone (17) and at or adjacent ends of the respective transverse strand-forming zones (14 or 14'), the resultant machine direction stretch being substantially greater than the resultant transverse direction stretch, at least that part of the machine direction stretch in which the notional junction zones (10) are substantially extended being subsequent to the transverse direction stretch so that the transverse direction stretch affects the orientation behaviour of the structure during said part of the machine direction stretch, and substantial contraction in the transverse direction occurring during said part of the machine direction stretch.

2. The method of Claim 1, wherein the material is stretched in the machine direction until the notional junction zone (10) has increased in length in the machine direction by a ratio of at least about 3.5:1.

3. The method of Claim 1 or 2, wherein the maximum transverse direction dimension of said holes (2) is about 30% or less of the transverse direction pitch of the holes (2).

4. The method of any of the preceding Claims, wherein said transverse direction stretch is preceded by stretching the material in the machine direction.

5. The method of any of the preceding Claims, wherein said part of the machine direction stretch is the last stretch applied to the material.

6. The method of any of Claims 1 to 3, wherein the stretching is carried out as a two-stage procedure, namely a transverse direction stretch followed by a machine direction stretch.

7. The method of any of Claims 1 to 3, wherein the stretching is carried out as a three-stage proceedure, namely a machine direction stretch followed by a transverse direction stretch followed by a machine direction stretch.

8. The method of any of the preceding Claims, wherein the whole of the notional junction zone (10) narrows down by at least about 30% relative to its original width.

9. The method of any of the precedings Claims, wherein at the end of the machine direction stretching, the stretch ratio at the end portions of the notional junction zone (10) is greater than the stretch ratio at the centre of the notional junction zone (10).

10. The method of any of the preceding Claims, wherein at the end of the machine direction stretching, the stretch ratio at the end portions of the notional junction zone (10) is not more than about 50% greater than the stetch ratio at the centre of the notional junction zone (10).

11. The method of any of Claims 1 to 9, wherein at the end of the machine direction stretching, the stretch ratio at the end portions of the notional junction zone (10) is not more than about 40% greater than the stretch ratio at the centre of the notional junction zone (10).

12. The method of any of Claims 1 to 9, wherein at the end of the machine direction stretching, the machine direction stretch ratio at the end portions of the notional junction zone (10) is not more than about 20% greater than the machine direction stretch ratio at the centre of the notional junction zone (10).

13. The method of any of the preceding Claims, wherein at the end of the machine direction stretching, the machine direction stretch ratio at the mid-points of the main strands (12 or 12') is not more than about 100% greater than the machine direction stretch ratio at the centres of the notional junction zones (10).

14. The method of any of the preceding Claims, wherein during the transverse direction stretch the orientation penetrates beyond the respective machine direction tangent lines (4, 5).

15. The method of any of the preceding Claims, wherein in the mesh structure (15) produced, no part of the notional junction zone (10) has a substantially greater transverse direction dimension than the end portions of the notional junction zone (10).

16. An integral, biaxially-molecularly-oriented plastics material mesh structure (15) having a thickness of not less than about 1 mm at its thickest point, and having substantially greater strength in the machine direction than in the transverse direction, the mesh structure (15) comprising:
main oriented strands (12 or 12') extending in the machine direction;
transverse oriented strands (14 or 14') extending in the transverse direction; and
oriented junctions between respective main and transverse strands (12 or 12', 14 or 14'), the thickest part of the junction having reduced in thickness by at least about 30% during stretching, respective main and transverse strands (12 or 12', 14 or 14') being interconnected by continuously oriented crotches (16) with the orientation in the direction running around the respective crotches, there being a thicker zone (17) at each junction which is substantially thicker than biaxially-oriented zones (18) on either side thereof each on the axis of a respective transverse strand (14 or 14'), each biaxially-oriented zone (18) merging gradually with the crotches (16) around the biaxially-oriented zone (18), as seen in section normal to the plane of the mesh structure (15) and along a line passing through the centre of the junction at 45° to the machine direction, which thicker zone (17) has a substantially greater dimension parallel to the machine direction than that parallel to the transverse direction, which thicker zone (17) has been substantially oriented substantially uniaxially in the machine direction, which thicker zone (17) defines no substantial dip, and the machine direction stretch ratio applied to the end portions of the junction not being more than about 100% greater than that applied to the centre of the junction, thereby providing continuous substantially uniaxial orientation in the machine direction from end to end of the mesh structure (15).

17. An integral, biaxially-molecularly-oriented plastics material mesh structure (15) having a thickness of not less than about 1 mm at its thickest point, and having substantially greater strength in the machine direction than in the transverse direction, the mesh structure comprising:
main oriented strands (12 or 12') extending in the machine direction;
transverse oriented strands (14 or 14') extending in the transverse direction; and
oriented junctions between respective main and transverse strands (12 or 12', 14 or 14'), the thickest part of the junction having reduced in thickness by at least about 30% during stretching, respective main and transverse strands (12 or 12', 14 or 14') being interconnected by continuously oriented crotches (16) with the orientation in the direction running around the respective crotches (16), there being a thicker zone (17) at each junction which is substantially thicker than biaxially-oriented zones (18) on either side thereof each on the axis of a respective transverse strand (14 or 14'), which thicker zone (17) has a substantially greater dimension parallel to the machine direction than that parallel to the transverse direction, which thicker zone (17) has been substantially oriented substantially uniaxially in the machine direction, which thicker zone (17) defines no substantial dip, the thickness of the thinnest point of each said biaxially-oriented zone (18) not being less than about 40% of the thickness of the 45° point of the crotches (16) around the respective biaxially-oriented zone (18), and the machine direction stretch ratio applied to the end portions of the junction not being more than about 100% greater than that applied to the centre of the junction, thereby providing continuous substantially uniaxial orientation in the machine direction from end to end of the mesh structure (15).

18. An integral, biaxially-molecularly-oriented plastics material mesh structure (15) having a thickness of not less than about 1 mm at its thickest point, and having substantially greater strength in the machine direction than in the transverse direction, the mesh structure comprising:
main oriented strands (12 or 12') extending in the machine direction;
tranverse oriented strands (14 or 14') extending in the transverse direction; and
oriented junctions between respective main and transverse strands (12 or 12', 14 or 14'), the thickest part of the junction having reduced in thickness by at least about 30% during stretching, respective main and transverse strands (12 or 12', 14 or 14') being interconnected by continuously oriented crotches (16) with the orientation in the direction running around the respective crotches (16), there being a thicker zone (17) at each junction which is substantially thicker than biaxially-oriented zones (18) on either side thereof each on the axis of a respective transverse strand (14 or 14'), which thicker zone (17) has a substantially greater dimension parallel to the machine direction than that parallel to the transverse direction, which thicker zone (17) has been substantially oriented substantially uniaxially in the machine direction, which thicker zone (17) defines no substantial dip, the thickness of the thinnest point of each said biaxially-oriented zone (18) not being less than about 40% of the thickness of the 45° point of the crotches (16) around the respective biaxially-oriented zone (18), or not being less than the thickness of the thinner 45° point of the crotches (16) around the respective biaxially-oriented zone (18) for those locations where the thicknesses of the 45° points are different, and the machine direction stretch ratio applied to the end portions of the junction not being more than about 100% greater than that applied to the centre of the junction, thereby providing continuous substantially uniaxial orientation in the machine direction from end to end of the mesh structure (15).

19. The mesh structure of any of Claims 16 to 18, wherein said junction thicker zone (17) has a dimension parallel to the machine direction which is at least twice that parallel to the transverse direction.

20. The mesh structure of any of Claims 16 to 19, wherein said junction thicker zone (17) has increased in length in the machine direction by a ratio of at least about 3.5:1 during stretching.

21. The mesh structure of any of Claims 16 to 20, wherein no part of said junction thicker zone (17) is substantially wider than the end portions of said thicker zone (17).

22. The mesh structure of any of Claims 16 to 21, wherein the stretch ratio at the end portions of the junction thicker zone (17) is greater than the stretch ratio at the centre of the junction thicker zone (17).

23. The method of strengthening soil, comprising embedding in the soil the mesh structure of any of Claims 16 to 22.

24. A composite civil engineering structure, comprising a mass of particulate material strengthened by embedding therein the mesh structure of any of Claims 16 to 22.

## Patentansprüche

1. Verfahren zur Herstellung einer integralen, aus einem biaxial molekular-orientierten Plastmaterial bestehenden Gitterstruktur (15), das folgende Schritte umfaßt:
Bereitstellen eines Plast-Ausgangsmaterials (1) mit einer Stärke von nicht weniger als etwa 2 mm an der dicksten Stelle, das ein Muster von Löchern (2) auf einem fiktiven, im wesentlichen quadratischen oder rechteckigen Gitternetz hat, das strangbildende Zonen (8, 9) zwischen nebeneinanderliegenden Löchern (2) und fiktive Knotenzonen (10) zwischen den strangbildenden Zonen definiert;
Strecken des Materials in der Querrichtung, um die strangbildenden Zonen (9) zu strecken, im Querschnitt zu vermindern und in der Querrichtung zu orientieren, um in der Querrichtung orientierte Stränge (14 oder 14') zu formen; und
Strecken des Materials in der Maschinenrichtung, um die strangbildenden Zonen (8) zu strecken, im Querschnitt zu vermindern und in der Hauptrichtung zu orientieren, um in der Maschinenrichtung orientierte Hauptstränge (12 oder 12') zu formen, die allgemein im rechten Winkel zu den Quersträngen (14 oder 14') verlaufen, wobei die entsprechenden hauptsächlichen strangbildenden Zonen (8) im beachtlichen Maße im Querschnitt vermindert werden, bevor die Verminderung des Querschnitts der fiktiven Knotenzone (10) beginnt und die Verminderung des Querschnitts der hauptsächlichen strangbildenden Zonen (8) die Enden der fiktiven Knotenzone (10) erreicht, wobei das Strecken ohne die Bildung von wesentlichen Durchhängen in der fiktiven Knotenzone (10) so lange fortgesetzt wird, bis die Verminderung des Querschnitts direkt durch die fiktive Knotenzone (10) bis zum ausgerichteten Hauptstrang (12 oder 12') am anderen Ende der fiktiven Knotenzone (10) reicht, und so, daß das Streckverhältnis an den Endabschnitten der fiktiven Knotenzone (10) nicht um mehr als etwa 100% größer als das Streckverhältnis in der Mitte der fiktiven Knotenzone (10) ist, bis die Verminderung der Querschnitts um Gabelungen (16) bis zu den entsprechenden Quersträngen (14 oder 14') reicht, so daß die Orientierung in den Gabelungen (16) in der Richtung erfolgt, die um die entsprechende Gabelung (16) verläuft, bis der stärkste Teil der fiktiven Knotenzone (10) um mehr als etwa 30% in der Stärke verringert worden ist und bis sich die Länge der fiktiven Knotenzone (10) in der Hauptrichtung um ein Verhältnis von wenigstens etwa 2,5:1 vergrößert hat, wobei die gesamte fiktive Knotenzone (10) wesentlich schmaler wird, so daß ein orientierter Knotenpunkt und kontinuierlich orientierte Gabelungen (16) gebildet werden, welche die entsprechenden Haupt- und Querstränge (12 oder 12', 14 oder 14') verbinden, wobei an jedem Knotenpunkt eine zentrale Zone (17) vorhanden ist, die im wesentlichen uniaxial in der Maschinenrichtung orientiert ist, um von einem Ende zum anderen Ende der Gitterstruktur (15) in der Maschinenrichtung eine durchgängige, im wesentlichen uniaxiale Orientierung zu schaffen und eine im wesentlichen biaxiale Orientierung in den Zonen (18) auf den beiden Seiten der zentralen Zone (17) und an den Enden der entsprechenden querlaufenden strangbildenden Zonen (14 oder 14') oder angrenzend an diese zu schaffen, wobei die resultierende Streckung in der Maschinenrichtung wesentlich größer als die resultierende Streckung in der Querrichtung ist, wobei zumindest der Teil der Streckung in der Maschinenrichtung, in dem die fiktiven Knotenzonen (10) wesentlich ausgedehnt sind, sich an die Streckung in der Querrichtung anschließt, so daß die Streckung in der Querrichtung das Orientierungsverhalten der Struktur während des genannten Teils der Streckung in der Maschinenrichtung beeinflußt und während dieses Teils der Streckung in der Maschinenrichtung ein wesentliches Zusammenziehen in der Querrichtung auftritt.

2. Verfahren nach Anspruch 1, bei dem das Material in der Maschinenrichtung gestreckt wird, bis die Länge der fiktiven Knotenzone (10) in der Maschinenrichtung um ein Verhältnis von mindestens 3,5:1 zugenommen hat.

3. Verfahren nach Anspruch 1 oder 2, bei dem die maximale Abmessung der Löcher (2) in der Querrichtung etwa 30% des Abstands der Löcher (2) in der Querrichtung oder weniger beträgt.

4. Verfahren nach einem der vorhergehenden Ansprüche, bei dem der Streckung in der Querrichtung eine Streckung des Materials in der Maschinenrichtung vorausgeht.

5. Verfahren nach einem der vorhergehenden Ansprüche, bei dem der genannte Teil der Streckung in der Maschinenrichtung die letzte Streckung ist, die auf das Material ausgeübt wird.

6. Verfahren nach einem der Ansprüche 1 bis 3, bei dem die Streckung in einem zweistufigen Verfahren ausgeführt wird, d. h., eine Streckung in der Querrichtung, an die sich eine Streckung in der Maschinenrichtung anschließt.

7. Verfahren nach einem der Ansprüche 1 bis 3, bei dem die Streckung in einem dreistufigen Verfahren ausgeführt wird, d. h., eine Streckung in der Maschinenrichtung, an die sich eine Streckung in der Querrichtung anschließt, gefolgt von einer Streckung in der Maschinenrichtung.

8. Verfahren nach einem der vorhergehenden Ansprüche, bei dem die gesamte fiktive Knotenzone (10) um wenigstens etwa 30% im Verhältnis zu ihrer ursprünglichen Breite eingeengt wird.

9. Verfahren nach einem der vorhergehenden Ansprüche, bei dem am Ende der Streckung in der Maschinenrichtung das Streckverhältnis an den Endabschnitten der fiktiven Knotenzone (10) größer als das Streckverhältnis in der Mitte der fiktiven Knotenzone (10) ist.

10. Verfahren nach einem der vorhergehenden Ansprüche, bei dem am Ende der Streckung in der Maschinenrichtung das Streckverhältnis an den Endabschnitten der fiktiven Knotenzone (10) um nicht mehr als etwa 50% größer als das Streckverhältnis in der Mitte der fiktiven Knotenzone (10) ist.

11. Verfahren nach einem der Ansprüche 1 bis 9, bei dem am Ende der Streckung in der Maschinenrichtung das Streckverhältnis an den Endabschnitten der fiktiven Knotenzone (10) um nicht mehr als etwa 40% größer als das Streckverhältnis in der Mitte der fiktiven Knotenzone (10) ist.

12. Verfahren nach einem der Ansprüche 1 bis 9, bei dem am Ende der Streckung in der Maschinenrichtung das Streckverhältnis in der Maschinenrichtung an den Endabschnitten der fiktiven Knotenzone (10) um nicht mehr als etwa 20% größer als das Streckverhältnis in der Maschinenrichtung in der Mitte der fiktiven Knotenzone (10) ist.

13. Verfahren nach einem der vorhergehenden Ansprüche, bei dem am Ende der Streckung in der Maschinenrichtung das Streckverhältnis in der Maschinenrichtung an den Mittelpunkten der Hauptstränge (12 oder 12') um nicht mehr als etwa 100% größer als das Streckverhältnis in der Maschinenrichtung in der Mitte der fiktiven Knotenzone (10) ist.

14. Verfahren nach einem der vorhergehenden Ansprüche, bei dem während der Streckung in der Querrichtung die Orientierung über die entsprechenden tangierenden Linien (4, 5) der entsprechenden Maschinenrichtung hinausgeht.

15. Verfahren nach einem der vorhergehenden Ansprüche, bei dem in der angefertigten Gitterstruktur (15), kein Teil der fiktiven Knotenzone (10) eine wesentlich größere Abmessung in der Querrichtung als die Endabschnitte der fiktiven Knotenzone (10) hat.

16. Integrale, aus einem biaxial molekular-orientierten Plastmaterial bestehende Gitterstruktur (15), die an ihrer dicksten Stelle eine Stärke von nicht weniger als etwa 1 mm hat und die in der Maschinenrichtung eine wesentlich größere Festigkeit als in der Querrichtung hat, wobei die Gitterstruktur (15) folgende Komponenten umfaßt:
in der Hauptrichtung orientierte Stränge (12 oder 12'), die in der Maschinenrichtung verlaufen;
in der Querrichtung orientierte Stränge (14 oder 14'), die in der Querrichtung verlaufen; und
orientierte Knotenpunkte zwischen den entsprechenden Haupt- und Quersträngen (12 oder 12', 14 oder 14'), wobei der stärkste Teil des Knotenpunktes während des Streckens in der Stärke um wenigstens etwa 30% vermindert wurde, wobei die entsprechenden Haupt- und Querstränge (12 oder 12', 14 oder 14') untereinander durch durchgängig orientierte Gabelungen (16) mit einer Orientierung in der Richtung verbunden sind, die um die entsprechenden Gabelungen verläuft, wobei an jedem Knotenpunkt eine stärkere Zone (17) vorhanden ist, die wesentlich stärker als die biaxial orientierten Zonen (18) jeweils auf der Achse eines entsprechenden Querstrangs (14 oder 14') an den Seiten der Zone ist, wobei jede biaxial orientierte Zone (18) allmählich mit den Gabelungen (16) um die biaxial orientierte Zone (18) verschmilzt, wie im Schnitt senkrecht zur Ebene der Gitterstruktur (15) deutlich wird, und längs einer Linie, die in einem Winkel von 45° zur Maschinenrichtung durch die Mitte des Knotenpunkts führt, wobei diese stärkere Zone (17) parallel zur Maschinenrichtung eine wesentlich größere Abmessung als parallel zur Querrichtung hat, wobei diese stärkere Zone (17) im wesentlichen uniaxial in der Maschinenrichtung orientiert worden ist, wobei diese stärkere Zone (17) keinen wesentlichen Durchhang bildet und das Streckverhältnis in der Maschinenrichtung, das an den Endabschnitten des Knotenpunktes angewandt wird, nicht um mehr als etwa 100% größer als dasjenige ist, das in der Mitte der Knotenpunktes angewandt wird, wodurch eine durchgängige, im wesentlichen uniaxiale Orientierung in der Maschinenrichtung von einem Ende der Gitterstruktur (15) zum anderen geschaffen wird.

17. Integrale, aus einem biaxial molekular-orientierten Plastmaterial bestehende Gitterstruktur (15), die an ihrer dicksten Stelle eine Stärke von nicht weniger als etwa 1 mm hat und die in der Maschinenrichtung eine wesentlich größere Festigkeit als in der Querrichtung hat, wobei die Gitterstruktur (15) folgende Komponenten umfaßt:
in der Hauptrichtung orientierte Stränge (12 oder 12'), die in der Maschinenrichtung verlaufen;
in der Querrichtung orientierte Stränge (14 oder 14'), die in der Querrichtung verlaufen; und
orientierte Knotenpunkte zwischen den entsprechenden Haupt- und Quersträngen (12 oder 12', 14 oder 14'), wobei der stärkste Teil des Knotenpunktes während des Streckens in der Stärke um wenigstens etwa 30% vermindert wurde, wobei die entsprechenden Haupt- und Querstränge (12 oder 12', 14 oder 14') untereinander durch durchgängig orientierte Gabelungen (16) mit einer Orientierung in der Richtung verbunden sind, die um die entsprechenden Gabelungen (16) verläuft, wobei an jedem Knotenpunkt eine stärkere Zone (17) vorhanden ist, die wesentlich stärker als die biaxial orientierten Zonen (18) jeweils auf der Achse eines entsprechenden Querstrangs (14 oder 14') an den Seiten der Zone ist, wobei diese stärkere Zone (17) parallel zur Maschinenrichtung eine wesentlich größere Abmessung als parallel zur Querrichtung hat, wobei diese stärkere Zone (17) im wesentlichen uniaxial in der Maschinenrichtung orientiert worden ist, wobei diese stärkere Zone (17) keinen wesentlichen Durchhang bildet, wobei die Stärke der dünnsten Stelle jeder der biaxial orientierten Zonen (18) nicht kleiner als etwa 40% der Stärke des 45°-Punktes der Gabelungen (16) um die entsprechende biaxial orientierte Zone (18) ist und wobei das Streckverhältnis in der Maschinenrichtung, das an den Endabschnitten des Knotenpunktes angewandt wird, nicht um mehr als etwa 100% größer als dasjenige ist, das in der Mitte der Knotenpunktes angewandt wird, wodurch eine durchgängige, im wesentlichen uniaxiale Orientierung in der Maschinenrichtung von einem Ende der Gitterstruktur (15) zum anderen geschaffen wird.

18. Integrale, aus einem biaxial molekular-orientierten Plastmaterial bestehende Gitterstruktur (15), die an ihrer dicksten Stelle eine Stärke von nicht weniger als etwa 1 mm hat und die in der Maschinenrichtung eine wesentlich größere Festigkeit als in der Querrichtung hat, wobei die Gitterstruktur folgende Komponenten umfaßt:
in der Hauptrichtung orientierte Stränge (12 oder 12'), die in der Maschinenrichtung verlaufen;
in der Querrichtung orientierte Stränge (14 oder 14'), die in der Querrichtung verlaufen; und
orientierte Knotenpunkte zwischen den entsprechenden Haupt- und Quersträngen (12 oder 12', 14 oder 14'), wobei der stärkste Teil des Knotenpunktes während des Streckens in der Stärke um wenigstens etwa 30% vermindert wurde, wobei die entsprechenden Haupt- und Querstränge (12 oder 12', 14 oder 14') untereinander durch durchgängig orientierte Gabelungen (16) mit einer Orientierung in der Richtung verbunden sind, die um die entsprechenden Gabelungen (16) verläuft, wobei an jedem Knotenpunkt eine stärkere Zone (17) vorhanden ist, die wesentlich stärker als die biaxial orientierten Zonen (18) jeweils auf der Achse eines entsprechenden Querstrangs (14 oder 14') an den Seiten der Zone ist, wobei diese stärkere Zone (17) parallel zur Maschinenrichtung eine wesentlich größere Abmessung als parallel zur Querrichtung hat, wobei diese stärkere Zone (17) im wesentlichen uniaxial in der Maschinenrichtung orientiert worden ist, wobei diese stärkere Zone (17) keinen wesentlichen Durchhang bildet, wobei die Stärke der dünnsten Stelle jeder der biaxial orientierten Zonen (18) nicht kleiner als etwa 40% der Stärke des 45°-Punktes der um die entsprechende biaxial orientierte Zone (18) führenden Gabelungen (16) oder nicht kleiner als die Stärke des dünneren 45°-Punktes der um die entsprechende biaxial orientierte Zone (18) führenden Gabelungen (16) für die Stellen ist, an denen die Stärke der 45°-Punkte unterschiedlich ist, und wobei das Streckverhältnis in der Maschinenrichtung, das an den Endabschnitten des Knotenpunktes angewandt wird, nicht um mehr als etwa 100% größer als dasjenige ist, das in der Mitte der Knotenpunktes angewandt wird, wodurch eine durchgängige, im wesentlichen uniaxiale Orientierung in der Maschinenrichtung von einem Ende der Gitterstruktur (15) zum anderen geschaffen wird.

19. Gitterstruktur nach einem der Ansprüche 16 bis 18, bei welcher die stärkere Knotenzone (17) eine Abmessung parallel zur Maschinenrichtung hat, die wenigstens das Zweifache derjenigen beträgt, die parallel zur Querrichtung verläuft.

20. Gitterstruktur nach einem der Ansprüche 16 bis 19, bei welcher die Länge der stärkeren Knotenzone (17) in der Maschinenrichtung während des Streckens um ein Verhältnis von wenigstens etwa 3,5:1 vergrößert worden ist.

21. Gitterstruktur nach einem der Ansprüche 16 bis 20, bei der kein Teil der stärkeren Knotenzone (17) wesentlich breiter als die Endabschnitte der stärkeren Zone (17) ist.

22. Gitterstruktur nach einem der Ansprüche 16 bis 21, bei der das Streckverhältnis an den Endabschnitten der stärkeren Knotenzone (17) größer als das Streckverhältnis in der Mitte der stärkeren Knotenzone (17) ist.

23. Verfahren zur Festigung des Bodens, das die Einbettung der Gitterstruktur nach einem der Ansprüche 16 bis 22 in den Boden umfaßt.

24. Verbundstruktur für den Tiefbau, die eine Masse eines Partikulatmaterials umfaßt, die dadurch verfestigt wird, daß die Gitterstruktur nach einem der Ansprüche 16 bis 22 in diese eingebettet wird.

## Revendications

1. Procédé de production d'une structure à mailles en plastique intégrale, à orientation moléculaire biaxiale (15), comprenant les étapes ci-dessous:
fourniture d'un matériau plastique de départ (1) ayant une épaisseur non inférieure à environ 2 mm au niveau de son point le plus épais, et comportant une configuration de trous (2) sur une grille imaginaire, pratiquement carrée ou rectangulaire, définissant des zones de formation de torons (8, 9) entre les trous adjacents respectifs (2) et des zones de jonction imaginaires (10) entre les zones de formation de torons;
étirement du matériau dans la direction transversale pour étirer, rétrécir et orienter lesdites zones de formation de torons (9) dans la direction transversale, pour former des torons à orientation transversale (14 ou 14'); et
étirement du matériau dans la direction de la machine pour étirer, rétrécir et orienter lesdites zones de formation de torons (8), pour former des torons principaux, orientés dans la direction de la machine (12 ou 12'), s'étendant généralement à des angles droits par rapport aux torons transversaux (14 ou 14'), les zones respectives de formation de torons principaux (8) étant rétrécies à un degré notable avant que la zone de jonction imaginaire (10) ne commence à se rétrécir, et le rétrécissement des zones de formation de torons principaux (8) atteignant les extrémités de la zone de jonction imaginaire (10), l'étirement étant poursuivi sans formation d'une quelconque dépression notable dans la zone de jonction imaginaire (10) jusqu'à ce que le rétrécissement s'étend directement à travers la zone de jonction imaginaire (10) vers le toron principal aligné (12 ou 12') au niveau de l'autre extrémité de la zone de jonction imaginaire (10), de sorte que le rapport d'étirage au niveau des parties d'extrémité de la zone de jonction imaginaire (10) ne dépasse pas de plus d'environ 100% le rapport d'étirage au niveau du centre de la zone de jonction imaginaire (10), jusqu'à ce que le rétrécissement s'étend autour de fourches (16) vers des torons transversaux respectifs (14 ou 14'), de sorte que dans les fourches (16), l'orientation se fait dans la direction entourant la fourche respective (16), jusqu'à ce que l'épaisseur de la partie la plus épaisse de la zone de jonction imaginaire (10) est réduite de plus d'environ 30%, et jusqu'à ce que la longueur de la zone de jonction imaginaire (10) s'est accrue dans la direction principale d'un rapport correspondant au moins à 2,5:1, l'ensemble de la zone de jonction imaginaire (10) étant notablement rétrécie, formant ainsi une jonction orientée, et des fourches à orientation continue (6) connectant les torons principaux et transversaux respectifs (12 ou 12', 14 ou 14'), une zone centrale (17) étant agencée au niveau de chaque jonction, orientée pratiquement de façon uniaxe dans la direction de la machine pour établir une orientation continue pratiquement uni axe dans la direction de la machine, d'une extrémité vers l'autre de la structure à mailles (15) et établir une orientation pratiquement biaxiale dans les zones (18) de chaque côté de ladite zone centrale (17) et au niveau ou près des extrémités adjacentes des zones transversales de formation de torons respectives (14 ou 14'), l'étirage résultant dans la direction de la machine étant notablement supérieur à l'étirage résultant dans la direction transversale, au moins la partie de l'étirage dans la direction de la machine dans laquelle les zones de jonction imaginaires (10) sont pratiquement étendues étant subséquent à l'étirage dans la direction transversale, de sorte que l'étirage dans la direction transversale affecte le comportement d'orientation de la structure au cours de ladite partie de l'étirage dans la direction de la machine, une contraction notable dans la direction transversale ayant lieu au cours de ladite partie de l'étirage dans la direction de la machine.

2. Procédé selon la revendication 1, dans lequel le matériau est étiré dans la direction de la machine jusqu'à ce que la longueur de la zone de jonction imaginaire (10) s'est accrue dans la direction de la machine d'un rapport correspondant au moins à environ 3,5:1.

3. Procédé selon les revendications 1 ou 2, dans lequel la dimension maximale dans la direction transversale desdits trous (2) représente environ 30% ou moins de l'écartement dans la direction transversale des trous (2).

4. Procédé selon l'une quelconque des revendications précédentes, dans lequel ledit étirage dans la direction transversale est précédé par un étirement du matériau dans la direction de la machine.

5. Procédé selon l'une quelconque des revendications précédentes, dans lequel ladite partie de l'étirage dans la direction de la machine correspond au dernier étirage appliqué au matériau.

6. Procédé selon l'une quelconque des revendications 1 à 3, dans lequel l'étirement est exécuté sous forme d'une procédure à deux étapes, c'est-à-dire que l'étirage dans la direction transversale est suivi par un étirage dans la direction de la machine.

7. Procédé selon l'une quelconque des revendications 1 à 3, dans lequel l'étirement est exécuté sous forme d'une procédure à trois étapes, c'est-à-dire que l'étirage dans la direction de la machine est suivi par un étirage dans la direction transversale, suivi par un étirage dans la direction de la machine.

8. Procédé selon l'une quelconque des revendications précédentes, dans lequel l'ensemble de la zone de jonction imaginaire (10) est rétréci d'au moins 30% par rapport à sa largeur originale.

9. Procédé selon l'une quelconque des revendications précédentes, dans lequel, à la fin de l'étirement dans la direction de la machine, le rapport d'étirage au niveau des parties d'extrémité de la zone de jonction imaginaire (10) est supérieur au rapport d'étirage au niveau du centre de la zone de jonction imaginaire (10).

10. Procédé selon l'une quelconque des revendications précédentes, dans lequel, à la fin de l'étirement dans la direction de la machine, le rapport d'étirage au niveau des parties d'extrémité de la zone de jonction imaginaire (10) ne représente pas plus d'environ 50% du rapport d'étirage au niveau du centre de la zone de jonction imaginaire (10).

11. Procédé selon l'une quelconque des revendications 1 à 9, dans lequel, à la fin de l'étirement dans la direction de la machine, le rapport d'étirage au niveau des parties d'extrémité de la zone de jonction imaginaire (10) ne représente pas plus d'environ 40% du rapport d'étirage au niveau du centre de la zone de jonction imaginaire (10).

12. Procédé selon l'une quelconque des revendications 1 à 9, dans lequel, à la fin de l'étirement dans la direction de la machine, le rapport d'étirage dans la direction de la machine au niveau des parties d'extrémité de la zone de jonction imaginaire (10) ne représente pas plus d'environ 20% du rapport d'étirage dans la direction de la machine au niveau du centre de la zone de jonction imaginaire (10).

13. Procédé selon l'une quelconque des revendications précédentes, dans lequel, à la fin de l'étirement dans la direction de la machine, le rapport d'étirage dans la direction de la machine au niveau des points médians des torons principaux (12 ou 12') ne représente pas plus d'environ 100% du rapport d'étirage dans la direction de la machine au niveau des centres des zones de jonction imaginaires (10).

14. Procédé selon l'une quelconque des revendications précédentes, dans lequel, au cours de l'étirage dans la direction transversale, l'orientation pénètre au-delà des lignes tangentielles respectives dans la direction de la machine (4, 5).

15. Procédé selon l'une quelconque des revendications précédentes, dans lequel aucune partie de la zone de jonction imaginaire (10) de la structure à mailles produite (15) ne présente une dimension dans la direction transversale notablement supérieure à celle des parties d'extrémité de la zone de jonction imaginaire (10).

16. Structure à mailles en plastique intégrale, à orientation moléculaire biaxiale (15), ayant une épaisseur non inférieure à environ 1 mm au niveau de son point le plus épais, et ayant une résistance notablement supérieure dans la direction de la machine que dans la direction transversale, la structure à mailles (15) comprenant:
des torons orientés principaux (12 ou 12') s'étendant dans la direction de la machine;
des torons orientés transversaux (14 ou 14') s'étendant dans la direction transversale; et
des jonctions orientées entre les torons principaux et transversaux respectifs (12 ou 12', 14 ou 14'), la partie la plus épaisse de la jonction ayant été réduite en épaisseur d'au moins environ 30% au cours de l'étirement, les torons principaux et transversaux respectifs (12 ou 12', 14 ou 14') étant interconnectés par des fourches à orientation continue (16), l'orientation étant dirigée dans la direction entourant les fourches respectives, une zone plus épaisse (17) étant agencée au niveau de chaque jonction, notablement plus épaisse que les zones à orientation biaxiale (18) de chaque côté correspondant sur l'axe d'un toron transversal respectif (14 ou 14'), chaque zone à orientation biaxiale (18) se confondant progressivement avec les fourches (16) autour de la zone à orientation biaxiale (18), vu dans une section perpendiculaire au plan de la structure à mailles (15) et le long d'une ligne traversant le centre de la jonction à 45° par rapport à la direction de la machine, cette zone plus épaisse (17) ayant une dimension notablement plus grande parallèlement à la direction de la machine que parallèlement à la direction transversale, cette zone plus épaisse (17) ayant été pratiquement orientée de façon pratiquement uni axe dans la direction de la machine, cette zone plus épaisse (17) ne définissant aucune dépression notable, et le rapport d'étirage dans la direction de la machine appliqué aux parties d'extrémité de la jonction ne représentant pas plus d'environ 100% de celui appliqué au centre de la jonction, pour établir ainsi une orientation continue pratiquement uni axe dans la direction de la machine, d'une extrémité vers l'autre extrémité de la structure à mailles (15).

17. Structure à mailles en plastique intégrale, à orientation moléculaire biaxiale (15), ayant une épaisseur non inférieure à environ 1 mm au niveau de son point le plus épais, et ayant une résistance notablement supérieure dans la direction de la machine que dans la direction transversale, la structure à mailles (15) comprenant:
des torons orientés principaux (12 ou 12') s'étendant dans la direction de la machine;
des torons orientés transversaux (14 ou 14') s'étendant dans la direction transversale; et
des jonctions orientées entre les torons principaux et transversaux respectifs (12 ou 12', 14 ou 14'), la partie la plus épaisse de la jonction ayant été réduite en épaisseur d'au moins environ 30% au cours de l'étirement, les torons principaux et transversaux respectifs (12 ou 12', 14 ou 14') étant interconnectés par des fourches à orientation continue (16), l'orientation étant dirigée dans la direction entourant les fourches respectives (16), une zone plus épaisse (17) étant agencée au niveau de chaque jonction, notablement plus épaisse que les zones à orientation biaxiale (18) de chaque côté correspondant sur l'axe d'un toron transversal respectif (14 ou 14'), cette zone plus épaisse (17) ayant une dimension notablement plus grande parallèlement à la direction de la machine que parallèlement à la direction transversale, cette zone plus épaisse (17) ayant été pratiquement orientée de façon pratiquement uni axe dans la direction de la machine, cette zone plus épaisse (17) ne définissant aucune dépression notable, l'épaisseur du point le moins épais de chacune desdites zones à orientation biaxiale (18) ne représentant pas moins d'environ 40% de l'épaisseur du point de 45° des fourches (16) entourant la zone à orientation biaxiale respective (18), et le rapport d'étirage dans la direction de la machine appliqué aux parties d'extrémité de la jonction ne représentant pas plus d'environ 100% de celui appliqué au centre de la jonction, pour établir ainsi une orientation continue, pratiquement uniaxe dans la direction de la machine, d'une extrémité vers l'autre extrémité de la structure à mailles (15).

18. Structure à mailles en plastique intégrale, à orientation moléculaire biaxiale (15), ayant une épaisseur non inférieure à environ 1 mm au niveau de son point le plus épais, et ayant une résistance notablement supérieure dans la direction de la machine que dans la direction transversale, la structure à mailles (15) comprenant:
des torons orientés principaux (12 ou 12') s'étendant dans la direction de la machine;
des torons orientés transversaux (14 ou 14') s'étendant dans la direction transversale; et
des jonctions orientées entre les torons principaux et transversaux respectifs (12 ou 12', 14 ou 14'), la partie la plus épaisse de la jonction ayant été réduite en épaisseur d'au moins environ 30% au cours de l'étirement, les torons principaux et transversaux respectifs (12 ou 12', 14 ou 14') étant interconnectés par des fourches à orientation continue (16), l'orientation étant dirigée dans la direction entourant les fourches respectives (16), une zone plus épaisse (17) étant agencée au niveau de chaque jonction, notablement plus épaisse que les zones à orientation biaxiale (18) de chaque côté correspondant sur l'axe d'un toron transversal respectif (14 ou 14'), cette zone plus épaisse (17) ayant une dimension notablement plus grande parallèlement à la direction de la machine que parallèlement à la direction transversale, cette zone plus épaisse (17) ayant été pratiquement orientée de façon pratiquement uni axe dans la direction de la machine, cette zone plus épaisse (17) ne définissant aucune dépression notable, l'épaisseur du point le moins épais de chacune desdites zones à orientation biaxiale (18) ne représentant pas moins d'environ 40% de l'épaisseur du point de 45° des fourches (16) entourant la zone à orientation biaxiale respective (18), ou n'étant pas inférieure à l'épaisseur du point de 45° moins épais des fourches (16) entourant la zone à orientation biaxiale respective (18) dans les emplacements où les épaisseurs des points de 45° sont différentes, et le rapport d'étirage dans la direction de la machine appliqué aux parties d'extrémité de la jonction ne représentant pas plus d'environ 100% de celui appliqué au centre de la jonction, pour établir ainsi une orientation continue, pratiquement uniaxe dans la direction de la machine, d'une extrémité vers l'autre extrémité de la structure à mailles (15).

19. Structure à mailles selon l'une quelconque des revendications 16 à 18, dans laquelle ladite zone de jonction plus épaisse (17) a une dimension parallèle à la direction de la machine représentant au moins le double de celle qui est parallèle à la direction transversale.

20. Structure à mailles selon l'une quelconque des revendications 16 à 19, dans laquelle ladite zone de jonction plus épaisse (17) a une longueur dans la direction de la machine accrue d'un rapport correspondant au moins à 3,5:1 au cours de l'étirement.

21. Structure à mailles selon l'une quelconque des revendications 16 à 20, dans laquelle aucune partie de ladite zone de jonction plus épaisse (17) n'est notablement plus large que les parties d'extrémité de ladite zone plus épaisse (17).

22. Structure à mailles selon l'une quelconque des revendications 16 à 20, dans laquelle le rapport d'étirage au niveau des parties d'extrémité de la zone de jonction plus épaisse (17) est supérieur au rapport d'étirage au niveau du centre de la zone de jonction plus épaisse (17).

23. Procédé de renforcement du sol, comprenant l'encastrement dans le sol de la structure à mailles selon l'une quelconque des revendications 16 à 22.

24. Structure composite de génie civil comprenant une masse de matériau particulaire renforcé par l'encastrement de la structure à mailles selon l'une quelconque des revendications 16 à 22.
